# EUROPEAN PATENT SPECIFICATION

(11) **EP 4 159 476 B1**
(45) Date of publication and mention of the grant of the patent: **14.05.2025**
(21) Application number: 21813237.1
(22) Date of filing: 28.05.2021
(51) Int. Cl.: B60C 1/00, C08C 19/25, C08F 297/04, C08K 5/541, C08L 7/00, C08L 15/00, C08L 53/02, C08L 101/12, C08K 3/32, C08K 3/36

(54) **TIRE RUBBER COMPOSITION AND TIRE**
REIFENGUMMIZUSAMMENSETZUNG UND REIFEN
COMPOSITION DE GOMME POUR PNEUMATIQUE ET PNEUMATIQUE

(30) Priority: 29.05.2020 JP 2020094135
(43) Date of publication of application: 05.04.2023
(73) Proprietor: The Yokohama Rubber Co., Ltd., Hiratsuka-shi, Kanagawa 254-8601 (JP)
(72) Inventor: SATO, Masaki, Hiratsuka-shi, Kanagawa 254-8601 (JP); SAWA, Hideaki, Hiratsuka-shi, Kanagawa 254-8601 (JP); ITO, Keisuke, Hiratsuka-shi, Kanagawa 254-8601 (JP); IZUNO, Kakeru, Hiratsuka-shi, Kanagawa 254-8601 (JP)
(74) Representative: Grünecker Patent- und Rechtsanwälte PartG mbB
(86) International application number: PCT/JP2021/020495
(87) International publication number: WO 2021/241746

(56) References cited:
- WO-A1-2013/099324
- WO-A1-2013/099324
- WO-A1-2013/099325
- WO-A1-2013/099325
- WO-A1-2019/073828
- WO-A1-2019/073828
- JP-A- 2013 108 042
- JP-A- 2013 108 042
- JP-A- 2016 003 280
- JP-A- 2016 003 280
- JP-A- 2016 037 543
- JP-A- 2016 037 543
- JP-A- 2019 048 921
- JP-A- 2019 048 921
- JP-A- 2019 199 533
- JP-A- 2019 199 533
- JP-A- 2021 054 260

## Description

### Technical Field

The present invention relates to a rubber composition of a tire and a tire.

### Background Art

In the related art, as a rubber composition used for a tire, a composition containing a modified conjugated diene rubber and silica has been known (for example, Patent Document 1). Patent Document 2 discloses a rubber composition for a tire tread containing a conjugated diene rubber containing 30 mass% or more of a specific conjugated diene rubber produced by a method for producing a conjugated diene rubber comprising specific steps and 15 mass% or more of a natural rubber; silica; and a silane coupling agent. Patent Document 3 discloses a rubber composition containing a diene-based rubber containing a butadiene rubber and a solution-polymerized styrene-butadiene rubber, silica, and an organosilicon compound. In the diene-based rubber, the content of the butadiene rubber is 10-90 mass% and the content of the solution-polymerized styrene-butadiene rubber is 10-90 mass%. Patent Document 4 discloses a rubber composition containing a conjugated dienic polymer obtained by reacting active terminals of a copolymer obtained by polymerizing monomer components containing a conjugated diene compound and a silicon-containing vinyl compound using a polymerization initiator, with a compound containing a nitrogen atom and/or a silicon atom; and a silica. The content of the conjugated dienic polymer is 25 to 50 mass%. The content of the silica in 100 parts by mass of the rubber component is 40 to 80 parts by mass. Patent Document 5 provides a rubber composition and a pneumatic tire using same. The document relates to a rubber composition in which 100 parts by mass of a rubber component contain: 5-55 mass% of an aromatic vinyl compound/conjugated diene compound copolymer (A) in which the aromatic vinyl compound content is at least 5 mass% and less than 15 mass% and the vinyl bond content of the conjugated diene compound portion is 10-70 mol%; and 5-75 mass% of an aromatic vinyl compound/conjugated diene compound copolymer (B) in which the aromatic vinyl compound content is at least 15 mass% and less than 30 mass% and the vinyl bond content of the conjugated diene compound portion is 10-70 mol%. Patent Document 6 also provides a rubber composition and a pneumatic tire using same.

The document relates to a rubber composition in which a rubber component contains 95 mass% or more of a conjugated diene polymer for which Tg is -75° to 0°C and Mw is 1.5×10⁵ to 1.5×10⁶, and 100 parts by mass of the rubber component contain: 5-65 mass% of an SBR (A) containing at least 5% and less than 15% by mass of styrene and having a vinyl bond content of 10-70 mol%; and 20-75 mass% of an SBR (B) containing at least 15% and less than 30% by mass of styrene and having a vinyl bond content of 10-70 mol%. Patent Document 7 provides a method for producing a conjugated diene-based rubber, which comprises the steps of: polymerizing a monomer mixture containing an isoprene monomer or isoprene and an aromatic vinyl monomer by using a polymerization initiator in an inert solvent to form a polymer block (A) having an active terminal; mixing the polymer block (A) having an active terminal with a monomer mixture containing 1,3-butadiene or 1,3-butadiene and an aromatic vinyl monomer, followed by continuing the polymerization to obtain a conjugated diene-based block copolymer chain having an active terminal which has the polymer block (A) and a polymer block (B); and reacting the active terminal of the conjugated diene-based block copolymer chain having an active terminal with a compound containing an alkoxysilyl group and/or a halogenated silyl group and hetero atoms (N, O, S and Si). Patent Document 8 discloses a rubber composition for a tire which comprises natural rubber, a diene-based blended rubber comprising a solution-polymerized SBR and an emulsion-polymerized SBR, an aromatic modified terpene resin, silica and carbon black, in which the solution-polymerized SBR contains a specific solution-polymerized SBR having a block containing an isoprene unit at one end and a modified terminal for silica at the other end.

### Citation List

### Patent Literature

Patent Document 1: WO 2019/073828
Patent Document 2: JP 2019 199533 A
Patent Document 3: JP 2019 048921 A
Patent Document 4: JP 2013 108042 A
Patent Document 5: WO 2013/099325 A1
Patent Document 6: WO 2013/099324 A1
Patent Document 7: JP 2016 037543 A
Patent Document 8: JP 2016 003280 A

### Summary of Invention

### Technical Problem

Recently, in accordance with improvement in required safety level, there is a demand for further improvements of tires in crack growth resistance (difficulty with which cracks grow), groove cracking resistance (difficulty with which cracks form in groovers), wear resistance, and chipping resistance.

In this connection, the inventors prepared rubber compositions for tires with reference to Patent Document 1 and evaluated crack growth resistance, groove cracking resistance, wear resistance, and chipping resistance of a formed tire. It was found that they did not always satisfy the currently required levels.

In light of the circumstances described above, an object of the present invention is to provide: a rubber composition of a tire that is excellent in crack growth resistance, groove cracking resistance, wear resistance, and chipping resistance of a formed tire and a tire manufactured using the rubber composition of the tire.

Note that, hereinafter, the crack growth resistance, the groove cracking resistance, the wear resistance, and the chipping resistance of the formed tire are also simply referred to as crack growth resistance, groove cracking resistance, wear resistance, and chipping resistance.

### Solution to Problem

As a result of diligent research on the problems described above, the present inventors have found that the problems described above can be solved by using predetermined amounts of a specific modified conjugated diene rubber and a natural rubber together, and completed the present invention.

In other words, the present inventors have found that the above-described problems can be solved by the following configurations.

(1) A rubber composition of a tire comprises a rubber component, a silica, and a silane coupling agent. The rubber component contains a specific conjugated diene rubber and a natural rubber. In the rubber component, the content of the specific conjugated diene rubber is 35 mass% or more and the content of the natural rubber is 10 mass% or more. The specific conjugated diene rubber is a conjugated diene rubber including a polymer block (A) containing an isoprene monomer unit and a polymer block (B) containing a 1,3-butadiene monomer unit and having a modified structure by a siloxane compound at least at one terminal. In the conjugated diene rubber: at least one of the polymer block (A) and the polymer block (B) contains a unit of a vinyl compound containing an amino group as a functional group interactable with a silica; the polymer block (A) has a weight average molecular weight (Mw) in a range of from 1000 to 30000, and an entire weight average molecular weight (Mw) in a range of from 50000 to 5000000; an entire aromatic vinyl monomer unit content is from 30 to 45 mass%; and an entire vinyl bond content is from 15 to 35 mass%. The content of the silica is from 50 to 150 parts by mass per 100 parts by mass of the rubber component. The content of the silane coupling agent is from 3 to 30 mass% with respect to the content of the silica.
(2) In the rubber composition of the tire according to (1), the aromatic vinyl monomer unit content of the specific conjugated diene rubber may be from 35 to 45 mass%.
(3) The rubber composition of the tire according to (1) or (2) may further comprise a thermoplastic resin having a softening point of 50°C or more. The content of the thermoplastic resin is from 1 to 20 parts by mass per 100 parts by mass of the rubber component, wherein the softening point is measured in accordance with JIS K2207:1996.
(4) In the rubber composition of the tire according to any one of (1) to (3), the silica may contain 20 parts by mass or more of a specific silica as a silica having a CTAB adsorption specific surface area of 190 m²/g or more, wherein the CTAB adsorption specific surface area is a value of the amount of CTAB adsorbed to the surface of silica measured in accordance with JIS K6217-3:2001.
(5) The rubber composition of the tire according to any one of (1) to (4) may further comprise alkyltriethoxysilane represented by General Formula (I) described later. The content of the alkyltriethoxysilane is from 2.0 to 15.0 mass% with respect to the content of the silica.
(6) The rubber composition of the tire according to any one of (1) to (5) may further comprise a liquid diene rubber having a weight average molecular weight of 3000 or more. The content of the liquid diene rubber is from 1.0 to 15.0 mass% with respect to the content of the silica.
(7) In the rubber composition of the tire according to claim (6), the liquid diene rubber may have a functional group derived from a silane compound represented by General Formula (II) described later.
(8) A tire may be manufactured using the rubber composition of the tire according to any one of (1) to (7).

### Advantageous Effects of Invention

As described below, an embodiment of the present invention can provide: the rubber composition of the tire that is excellent in crack growth resistance, groove cracking resistance, wear resistance, and chipping resistance of a formed tire; and the tire manufactured using the rubber composition of the tire.

### Brief Description of Drawings

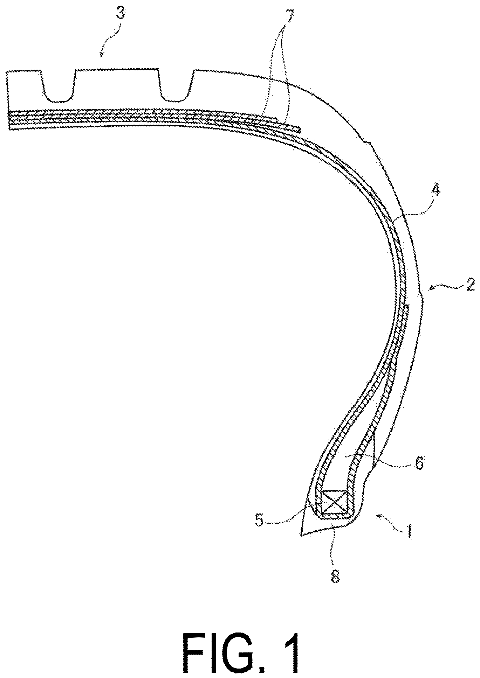

FIG. 1 is a partial cross-sectional schematic view that represents a tire according to an embodiment of the present invention.

### Description of Embodiments

Hereinafter, a rubber composition of a tire and a tire manufactured using the rubber composition of the tire according to an embodiment of the present invention will be described.

Note that in the present specification, value range indicated by using "from... to..." means the range including the former value as a lower limit value and the latter value as an upper limit value.

Furthermore, for each of the components contained in the rubber composition of a tire according to an embodiment of the present invention, one type may be used alone or two or more types may be used in combination. Here, when two or more types for each of the components are used in combination, the content of the corresponding component refers to the total content unless otherwise specified.

### [A] Rubber Composition of Tire

A rubber composition of a tire of an embodiment of the present invention (hereinafter also referred to as a "composition of an embodiment of the present invention") contains a rubber component, a silica, and a silane coupling agent. The rubber component contains a specific conjugated diene rubber and a natural rubber. In the rubber component, the content of the specific conjugated diene rubber is 35 mass% or more and the content of the butadiene rubber is 10 mass% or more. The specific conjugated diene rubber is a conjugated diene rubber including a polymer block (A) containing an isoprene monomer unit and a polymer block (B) containing a 1,3-butadiene monomer unit and having a modified structure by a siloxane compound at least at one terminal. In the conjugated diene rubber: at least one of the polymer block (A) and the polymer block (B) contains a unit of a vinyl compound containing an amino group as a functional group interactable with a silica; the polymer block (A) has a weight average molecular weight (Mw) in a range of from 1000 to 30000, and an entire weight average molecular weight (Mw) of the conjugated diene rubber in a range of from 50000 to 5000000; an aromatic vinyl monomer unit content is from 30 to 45 mass%; and a vinyl bond content is from 15 to 35 mass%. The content of the silica is from 50 to 150 parts by mass per 100 parts by mass of the rubber component. The content of the silane coupling agent is from 3 to 30 mass% with respect to the content of the silica.

Since the composition of an embodiment of the present invention has such a structure, it is considered that the effects described above are obtained. In particular, it is considered that the use of the specific conjugated diene rubber and the natural rubber together is characteristic.

The specific conjugated diene rubber contained in the composition of an embodiment of the present invention has a specific microstructure (aromatic vinyl monomer unit, vinyl bond content), and thus the specific conjugated diene rubber and the natural rubber are less likely to be compatible in the composition of an embodiment of the present invention. Therefore, it is considered that the original characteristics of the natural rubber are easily reflected and wear resistance and chipping resistance are excellent.

Here, since a polymer with a small vinyl bond content, such as the specific conjugated diene rubber, is slow in vulcanization rate, the polymer and the natural rubber are less likely to co-crosslink, and cracking easily occurs. On the other hand, since the specific conjugated diene rubber has an amino group in a polymer chain, the amino group improves the vulcanization rate and facilitates co-crosslinking with the natural rubber. As a result, it is considered that the composition of an embodiment of the present invention is also excellent in crack growth resistance and groove cracking resistance.

Each of components in the composition according to an embodiment of the present invention will be described in detail below.

### [I] Rubber Component

The rubber component contained in the composition according to an embodiment of the present invention contains a specific conjugated diene rubber and a natural rubber.

Here, in the rubber component, the content of the specific conjugated diene rubber is 35 mass% or more, and the content of the natural rubber is 10 mass% or more.

The rubber component may contain rubber components (other rubber components) that do not correspond to any of the specific conjugated diene rubber or the natural rubber.

The rubber component is preferably in a solid state.

### [1] Specific Conjugated Diene Rubber

As described above, the rubber component contains the specific conjugated diene rubber.

The specific conjugated diene rubber is a conjugated diene rubber including a polymer block (A) containing an isoprene monomer unit and a polymer block (B) containing a 1,3-butadiene monomer unit and having a modified structure by a siloxane compound at least at one terminal. In the specific conjugated diene rubber: at least one of the polymer block (A) and the polymer block (B) contains a unit of a vinyl compound containing an amino group as a functional group interactable with a silica; the polymer block (A) has a weight average molecular weight (Mw) in a range of from 1000 to 30000, and an entire weight average molecular weight (Mw) in a range of from 50000 to 5000000; an entire aromatic vinyl monomer unit content is from 30 to 45 mass%; and an entire vinyl bond content is from 15 to 35 mass%.

Note that the specific conjugated diene rubber has the entire aromatic vinyl monomer unit content of from 30 to 45 mass%, and therefore at least one of the polymer block (A) and the polymer block (B) contains the aromatic vinyl monomer unit.

### Polymer Block (A)

The polymer block (A) only needs to contain isoprene monomer units (preferably, mainly contain isoprene monomer units), is not particularly limited, and may be composed of only isoprene monomer units or may be composed of isoprene monomer units and monomer units other than the isoprene monomer units. In this case, as the monomer units other than the isoprene monomer units, aromatic vinyl monomer units are suitable, and the polymer block (A) of an embodiment of the present invention preferably contains aromatic vinyl monomer units in addition to the isoprene monomer units.

### Isoprene Monomer Unit Content

The content of the isoprene monomer units (isoprene monomer unit content) in the polymer block (A) is preferably 50 mass% or more, more preferably 70 mass% or more, and even more preferably 90 mass% or more. The upper limit of the isoprene monomer unit content is not particularly limited, but is preferably 99 mass% or less. By setting the isoprene monomer unit content in the polymer block (A) to be within the range described above, it is possible to further increase affinity of the conjugated diene rubber and a compounding agent, such as silica, in a case where the compounding agent, such as silica, is blended in the conjugated diene rubber. This allows the obtained rubber crosslinked product to be more excellent due to low heat build-up.

### Vinyl Bond Content in Isoprene Monomer Units

The vinyl bond content in the isoprene monomer units in the polymer block (A) is preferably from 3 to 90 mass% and more preferably from 5 to 80 mass%. By setting the vinyl bond content in the isoprene monomer units to be within the range described above, the low heat build-up of the obtained rubber crosslinked product can be further improved. Note that, in the present specification, the vinyl bond content in the isoprene monomer units refers to the total amount of isoprene monomer units having the 1,2-structure and the 3,4-structure in the isoprene monomer units.

### Aromatic Vinyl Compound to Form Aromatic Vinyl Monomer Unit

Examples of the aromatic vinyl compound to form the aromatic vinyl monomer unit include styrene, methylstyrene, ethylstyrene, t-butylstyrene, α-methylstyrene, α-methyl-p-methylstyrene, chlorostyrene, bromostyrene, methoxystyrene, dimethylaminomethylstyrene, dimethylaminoethyl styrene, diethylaminomethylstyrene, diethylaminoethylstyrene, cyanoethylstyrene, and vinylnaphthalene. Among these, styrene is preferable. The content (aromatic vinyl monomer unit content) of the aromatic vinyl monomer units (for example, styrene monomer units) (for example, styrene monomer unit content) in the polymer block (A) is preferably 50 mass% or less, more preferably 30 mass% or less, and even more preferably 10 mass% or less. The lower limit of the aromatic vinyl monomer unit content is not particularly limited, but is preferably 1 mass% or more.

### Unit of Vinyl Compound Containing Amino Group as Functional Group that Can Interact with Silica

In addition, the specific conjugated diene rubber contains the units of the vinyl compound containing the amino group as the functional group that can interact with silica in at least one of the polymer block (A) and the polymer block (B) described below. In the following, a case in which the polymer block (A) contains the units of the vinyl compound containing the amino group as the functional group that can interact with the silica is described as an example. Since the units of the vinyl compound containing the amino group as the functional group that can interact with the silica only need to be contained in at least one of the polymer block (A) and the polymer block (B) described below, when the polymer block (B) described below contains the units of the vinyl compound containing the amino group as the functional group that can interact with the silica, the polymer block (A) does not always need to contain them.

### Vinyl Compound Containing Amino Group as Functional Group that Can Interact with Silica

The vinyl compound containing the amino group as the functional group that can interact with the silica to form the units of the vinyl compound containing the amino group as the functional group that can interact with the silica only needs to be a compound containing the amino group as the functional group that can interact with the silica and a vinyl group, and is not particularly limited. Here, the amino group is preferably a silicon atom-containing amino group from the viewpoint of high interaction with silica.

### Suitable Aspect

As the vinyl compound containing the silicon atom-containing amino group, which is the preferable aspect of the vinyl compound containing the amino group as the functional group that can interact with the silica, for example, a compound represented by General Formula (1) below can be preferably used.

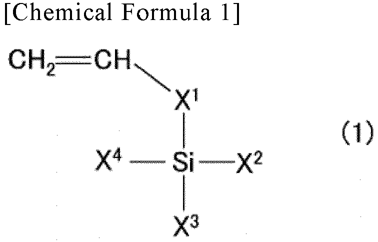

In General Formula (1) above, X¹ represents a chemical single bond or a hydrocarbylene group, and X², X³, and X⁴ are each independent and represent a substituted amino group, a hydrocarbyloxy group, or a hydrocarbyl group that may have a substituent. Note that at least one of X², X³, and X⁴ is a substituted amino group.

In General Formula (1) above, X¹ is the chemical single bond or the hydrocarbylene group, and preferably the chemical single bond. Examples of the hydrocarbylene group include an alkylene group, an alkanediyl group, an arylene group, or a group in which an arylene group and an alkylene group are bonded.

Examples of the alkylene group include a methylene group, an ethylene group, and a trimethylene group. Examples of the alkanediyl group include a vinylene group and an ethylene-1,1-diyl group. Examples of the arylene group include a phenylene group, a naphthylene, and a biphenylene group. Examples of the group in which the arylene group and the alkylene group are bonded include a group in which the phenylene group and the methylene group are bonded and a group in which the phenylene group and the ethylene group are bonded. When the X¹ is the hydrocarbylene group, X¹ is preferably the arylene group, and more preferably the phenylene group.

In General Formula (1) above, X², X³, and X⁴ are each independent and represent a substituted amino group, a hydrocarbyloxy group, or a hydrocarbyl group that may have a substituent. Among X², X³, and X⁴, at least one of them is preferably the substituted amino group, and among X², X³, and X⁴, two of them are more preferably the substituted amino groups.

As the substituted amino group that may constitute X², X³, and X⁴, the group represented by General Formula (2) below is preferable.

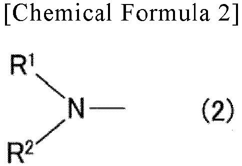

In General Formula (2) above, R¹ and R² may be bonded to one another or need not be bonded. When R¹ and R² are not bonded to one another, R¹ and R² are each independent and represent a hydrocarbyl group that may have a substituent or a trihydrocarbylsilyl group. When R¹ and R² are bonded to one another, R¹ and R² represent a hydrocarbylene group that may contain nitrogen atoms and/or oxygen atoms.

Examples of the hydrocarbyl group that may constitute R¹ and R² include chain alkyl groups, such as methyl groups, ethyl groups, n-propyl groups, isopropyl groups, n-butyl groups, isobutyl groups, sec-butyl groups, tert-butyl groups, n-pentyl groups, n-hexyl groups, and octyl groups; cyclic alkyl groups, such as cyclopentyl groups and cyclohexyl groups; and aryl groups, such as phenyl groups, benzyl groups, and naphthyl groups. Among these, the chain alkyl group is preferable, and the methyl group or the ethyl group are more preferable.

When the hydrocarbyl group that may constitute R¹ and R² has a substituent, the examples include a hydrocarbyl group having a hydrocarbyloxy group as a substituent. Examples of the hydrocarbyl group having the hydrocarbyloxy group as the substituent. Examples of the hydrocarbyl group having the hydrocarbyloxy group as the substituent include an alkoxyalkyl group, such as a methoxymethyl group, an ethoxymethyl group, and a methoxyethyl group; and an aryloxyalkyl group, such as a phenoxymethyl group.

Specific examples of the trihydrocarbylsilyl group that may constitute R¹ and R² include a trialkylsilyl group, such as a trimethylsilyl group, a trimethylsilyl group, and a tert-butyldimethylsilyl group.

In the case where R¹ and R² are bonded to one another, examples of the hydrocarbylene group that may constitute R¹ and R² include an alkylene group, such as a trimethylene group, a tetramethylene group, a pentamethylene group, a hexamethylene group, a heptamethylene group, an octamethylene group, a decamethylene group, a dodecamethylene group, and 2,2,4-trimethylhexane-1,6-diyl group; and an alkanediyl group, such as a pentan-2-ene-1,5-diyl group. When the hydrocarbylene group that may constitute R¹ and R² contains the nitrogen atom and/or the oxygen atom, examples of the hydrocarbylene group containing the nitrogen atom and/or the oxygen atom include a group represented by -CH = N-CH = CH-, a group represented by -CH = N-CH₂-CH₂-, and a group represented by -CH₂-CH₂-O-CH₂-CH₂-.

R¹ and R² are preferably an alkyl group or R¹ and R² are preferably bonded to one another and becomes an alkylene group, R¹ and R² are more preferably an alkyl group, and R¹ and R² are even more preferably a methyl group or an ethyl group.

In General Formula (2) above, specific examples of the group represented by General Formula (2) above when R¹ and R² are the hydrocarbyl group include a dialkylamino group, such as a dimethylamino group, a diethylamino group, an ethylmethylamino group, a di-n-propylamino group, a diisopropylamino group, a di-n-butyl amino group, a diisobutylamino group, a di-sec-butylamino group, and a di-tert-butylamino group; and a diarylamino group, such as a diphenylamino group. Among these, the dialkylamino group is preferable, and the dimethylamino group, the diethylamino group, and the di-n-butylamino group are more preferable.

In General Formula (2) above, specific examples of the group represented by General Formula (2) above when R¹ and R² are the hydrocarbyl group having the hydrocarbyloxy group as the substituent include a di(alkoxyalkyl) amino group, such as di(methoxymethyl) amino group and di(ethoxymethyl) amino group.

In General Formula (2) above, specific examples of the group represented by General Formula (2) above in a case where R¹ and R² are a trihydrocarbylsilyl group include a trialkylsilyl group-containing amino group, such as a bis(trimethylsilyl)amino group, a bis(tert-butyldimethylsilyl)amino group, and an N-trimethylsilyl-N-methylamino group.

In General Formula (2) above, specific examples of the group represented by General Formula (2) above in a case where R¹ and R² are bonded to one another to form a hydrocarbylene group include a 1-alkyleneimino group, such as a 1-trimethyleneimino group, a 1-pyrrolidino group, a 1-piperidino group, a 1-hexamethyleneimino group, a 1-heptamethyleneimino group, 1-octamethyleneimino group, a 1-decamethyleneimino group, and a 1-dodecamethyleneimino group.

In General Formula (2) above, specific examples of the group represented by General Formula (2) above in a case where R¹ and R² are bonded to one another to form a hydrocarbylene group containing the nitrogen atom and/or the oxygen atom include a 1-imidazolyl group, 4,5-dihydro-1-imidazolyl group, and a morpholino group.

As the group represented by General Formula (2) above, the dialkylamino group and the 1-alkyleneimino group are preferable, the dialkylamino group is more preferable, and the dimethylamino group, the diethylamino group, and the di-n-butyl amino group are further preferable.

Examples of the hydrocarbyloxy group that may constitute X², X³, and X⁴ in General Formula (1) above include an alkoxy group, such as a methoxy group, an ethoxy group, an n-propoxy group, an isopropoxy group, an n-butoxy group, a sec-butoxy group, and a tert-butoxy group; and an aryloxy group, such as a phenoxy group and a benzyloxy group.

Examples of the hydrocarbyl group that may constitute X², X³, and X⁴ in General Formula (1) above include an alkyl group, such as a methyl group, an ethyl group, an n-propyl group, an isopropyl group, an n-butyl group, a sec-butyl group, and a tert-butyl group; and an aryl group, such as a phenyl group, a 4-methyl-1-phenyl group, and a benzyl group.

When the hydrocarbyl group that may constitute X², X³, and X⁴ has a substituent, the examples include a hydrocarbyl group having a hydrocarbyloxy group as a substituent and an alkoxyalkyl group, such as a methoxymethyl group, an ethoxymethyl group, and an ethoxyethyl group.

In General Formula (1) above, specific examples of the vinyl compound containing the silicon atom-containing amino group represented by General Formula (1) above when X¹ is a chemical single bond and one of X², X³, and X⁴ is a substituted amino group include (dialkylamino)dialkylvinylsilane, such as (dimethylamino)dimethylvinylsilane, (ethylmethylamino)dimethylvinylsilane, (di-n-propylamino)dimethylvinylsilane, (diisopropylamino)dimethylvinylsilane, (dimethylamino)diethylvinylsilane,(ethylmethylamino)diethylvinylsilane, (di-n-propylamino)diethylvinylsilane, and (diisopropylamino)diethylvinylsilane; [bis(trialkylsilyl)amino]dialkylvinylsilane, such as [bis(trimethylsilyl)amino]dimethylvinylsilane, [bis(t-butyldimethylsilyl)amino]dimethylvinylsilane, [bis(trimethylsilyl)amino]diethylvinylsilane, and [bis(t-butyldimethylsilyl)amino]diethylvinylsilane; (dialkylamino)di(alkoxyalkyl)vinylsilane, such as (dimethylamino)di(methoxymethyl)vinylsilane, (dimethylamino)di(methoxyethyl)vinylsilane, (dimethylamino)di(ethoxymethyl)vinylsilane, (dimethylamino)di(ethoxyethyl)vinylsilane, (diethylamino)di(methoxymethyl)vinylsilane, (diethylamino)di(methoxyethyl)vinylsilane, (diethylamino)di(ethoxymethyl)vinylsilane, and (diethylamino)di(ethoxyethyl)vinylsilane; and a cyclic aminodialkylvinylsilane compounds, such as pyrrolidinodimethylvinylsilane, piperidinodimethylvinylsilane, hexamethyleneiminodimethylvinylsilane, 4,5-dihydroimidazolyldimethylvinylsilane, and morpholinodimethylvinylsilane.

Specific examples of the vinyl compound containing the silicon atom-containing amino group represented by General Formula (1) above in a case where X¹ is a hydrocarbylene group and one of X², X³, and X⁴ is a substituent amino group in General Formula (1) above include (dialkylamino)dialkylvinylphenylsilane, such as (dimethylamino)dimethyl-4-vinylphenylsilane, (dimethylamino)dimethyl-3-vinylphenylsilane, (diethylamino)dimethyl-4-vinylphenylsilane, (diethylamino)dimethyl-3-vinylphenylsilane, (di-n-propylamino)dimethyl-4-vinylphenylsilane(di-n-propylamino)dimethyl-3-vinylphenylsilane, (di-n-butylamino)dimethyl-4-vinylphenylsilane, (di-n-butylamino) dimethyl-3-vinylphenylsilane, (dimethylamino)diethyl-4-vinylphenylsilane, (dimethylamino)diethyl-3-vinylphenylsilane, (diethylamino)diethyl-4-vinylphenylsilane, (diethylamino)diethyl-3-vinylphenylsilane, (di-n-propylamino)diethyl-4-vinylphenylsilane, (di-n-propylamino)diethyl-3-vinylphenylsilane, (di-n-butylamino)diethyl-4-vinylphenylsilane, and (di-n-butylamino)diethyl-3-vinylphenylsilane.

Specific example of the vinyl compound containing the silicon atom-containing amino group represented by General Formula (1) above in a case where X¹ is a chemical single bond and two of X², X³, and X⁴ are the substituted amino groups in General Formula (1) above include bis(dialkylamino)alkylvinylsilane, such as bis(dimethylamino)methylvinylsilane, bis(diethylamino)methylvinylsilane, bis(di-n-propylamino)methylvinylsilane, bis(di-n-butylamino)methylvinylsilane, bis(dimethylamino)ethylvinylsilane, bis(diethylamino)ethylvinylsilane, bis(di-n-propylamino)ethylvinylsilane, and bis(di-n-butylamino)ethylvinylsilane; bis[bis(trialkylsilyl)amino]alkylvinylsilane, such as bis[bis(trimethylsilyl)amino]methylvinylsilane, bis[bis(tert-butyldimethylsilyl)amino]methylvinylsilane, bis[bis(trimethylsilyl)amino]ethylvinylsilane, and bis[bis(tert-butyldimethylsilyl)amino]ethylvinylsilane, bis(dialkylamino)alkoxyalkylsilane, such as bis(dimethylamino)methoxymethylvinylsilane, bis(dimethylamino)methoxyethylvinylsilane, bis(dimethylamino)ethoxymethylvinylsilane, bis(dimethylamino)ethoxyethylvinylsilane, bis(diethylamino)methoxymethylvinylsilane, bis(diethylamino)methoxyethyl vinylsilane, bis(diethylamino)ethoxymethylvinylsilane, and bis(dimethylamino)ethoxyethylvinylsilane; and a bis(cyclic amino)alkylvinylsilane compounds, such as bis(pyrrolidino)methylvinylsilane, bis(piperidino)methylvinylsilane, bis(hexamethyleneimino)methylvinylsilane, bis(4,5-dihydroimidazolyl)methylvinylsilane, and bis(morpholino)methylvinylsilane.

Specific examples of the vinyl compound containing a silicon atom-containing amino group represented by General Formula (1) above when X¹ is a hydrocarbylene group and two of X², X³, and X⁴ are the substituted amino groups in General Formula (1) above include bis(dialkylamino)alkylvinylphenylsilane, such as bis(dimethylamino)methyl-4-vinylphenylsilane, bis(dimethylamino)methyl-3-vinylphenylsilane, bis(diethylamino)methyl-4-vinylphenylsilane, bis(diethylamino)methyl-3-vinylphenylsilane, bis(di-n-propylamino)methyl-4-vinylphenylsilane, bis(di-n-propylamino)methyl-3-vinylphenylsilane, bis(di-n-butylamino)methyl-4-vinylphenylsilane, bis(di-n-butylamino)methyl-3-vinylphenylsilane, bis(dimethylamino)ethyl-4-vinylphenylsilane, bis(dimethylamino)ethyl-3-vinylphenylsilane, bis(diethylamino)ethyl-4-vinylphenylsilane, bis(diethylamino)ethyl-3-vinylphenylsilane, bis(di-n-propylamino)ethyl-4-vinylphenylsilane, bis(di-n-propylamino)ethyl-3-vinylphenylsilane, and bis(di-n-butylamino)ethyl-4-vinylphenylsilanebis(di-n-butylamino)ethyl-3-vinylphenylsilane.

In General Formula (1) above, specific examples of the vinyl compound containing the silicon atom-containing amino group represented by General Formula (1) above in a case where X¹ is a chemical single bond and three of X², X³, and X⁴ are the substituent amino groups include tris(dialkylamino)vinylsilane, such as tris(dimethylamino)vinylsilane, tris(diethylamino) vinylsilane tris(di-n-propylamino)vinylsilane, and tris(di-n-butylamino)vinylsilane.

Specific examples of the vinyl compound containing the silicon atom-containing amino group represented by General Formula above (1) in a case where X¹ is a hydrocarbylene group and three of X², X³ and X⁴ are the substituent amino groups in General Formula above (1) include tris(dialkylamino)vinylphenylsilane, such as tris(dimethylamino)-4-vinylphenylsilane, tris(dimethylamino)-3-vinylphenylsilane, tris(diethylamino)-4-vinylphenylsilane, tris(diethylamino)-3-vinylphenylsilane, tris(di-n-propylamino)-4-vinylphenylsilane, tris(di-n-propylamino)-3-vinylphenylsilane, tris(di-n-butylamino)-4-vinylphenylsilane, and tris(di-n-butylamino)-3-vinylphenylsilane.

Among the compounds represented by General Formula (1) above, a compound in which X¹ is a chemical single bond is preferable, a compound in which X¹ is a chemical single bond and two of them among X², X³, and X⁴ are the substituted amino group is more preferable, and a compound in which X¹ is a chemical single bond and two of them among X², X³, and X⁴ are dialkylamino groups are particularly preferable.

Among the compounds represented by General Formula (1) above, bis(dimethylamino)methylvinylsilane, bis(diethylamino)methylvinylsilane, and bis(di-n-butyl amino)methylvinylsilane are preferable, and bis(diethylamino)methylvinylsilane is particularly preferable.

Further, the vinyl compound containing the amino group as the functional group that can interact with the silica other than the compounds represented by General Formula (1) above includes bis(trialkylsilyl)aminostyrene, such as 4-N,N-bis(trimethylsilyl)aminostyrene and 3-N,N-bis(trimethylsilyl)aminostyrene; bis(trialkylsilyl)aminoalkylstyrene, such as 4-bis(trimethylsilyl)aminomethylstyrene, 3-bis(trimethylsilyl)aminomethylstyrene, 4-bis(trimethylsilyl)aminoethylstyrene, and 3-bis(trimethylsilyl)aminoethylstyrene; and pyrrolidinoethyl styrene, and among these, pyrrolidinoethyl styrene is preferable. Note that as the pyrrolidinoethyl styrene, any of an ortho body, a meta body, and a para body may be used, but a meta body and a para body are preferable, and a mixture of a meta body and a para body is more preferable.

Note that when the compound represented by General Formula (1) above is used as the vinyl compound containing the amino group as the functional group that can interact with the silica, the unit represented by General Formula (3) below is introduced into the specific conjugated diene rubber as the unit of the vinyl compound containing the amino group as the functional group that can interact with the silica.

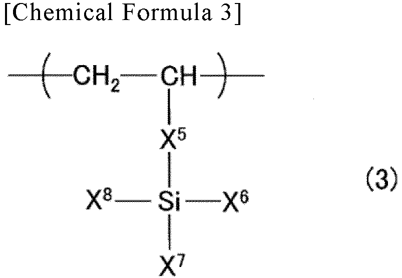

In General Formula (3) above, X⁵ represents a chemical single bond or a hydrocarbylene group, and X⁶, X⁷, and X⁸ are each independent and represent a hydroxyl group, a substituted amino group, a hydrocarbyloxy group, or a hydrocarbyl group that may have a substituent. Note that at least one of X⁶, X⁷, and X⁸ is a substituted amino group.

In addition, in the unit represented by General Formula (3) above, X⁵ corresponds to X¹ in the compound represented by General Formula (1) above, in the unit represented by General Formula (3) above, X⁶, X⁷, and X⁸ correspond to X², X³, and X⁴ in the compound represented by General Formula (1) above, respectively. Therefore, in the units represented by General Formula (3) above, X⁵, X⁶, X⁷, and X⁸ can be the same as X¹, X², X³, and X⁴ in the compound represented by General Formula (1) above, respectively. Furthermore, in a case of using at least one of X², X³, and X⁴ being the substituted amino group or the hydrocarbyloxy group as the compound represented by General Formula (1) above, by hydrolyzing the substituted amino group or the hydrocarbyloxy group in any step and timing, at least one of X², X³, and X⁴ can be a hydroxyl group.

### Content

The content of the units of the vinyl compound containing the amino group as the functional group that can interact with the silica in the polymer block (A) is not particularly limited. The content with respect to all monomer units constituting the polymer block (A) is preferably adjusted to be in the range of from 0.01 to 20 mass%, more preferably in the range of from 0.02 to 2 mass%, and particularly in the range of from 0.05 to 1 mass%. By setting the content of the unit of the vinyl compound containing the amino group as the functional group that can interact with the silica to be within the range described above, an effect of suppressing adhesion to a roll and effects of improving low heat build-up and steering stability can be further remarkable.

### Other Monomer Units

Furthermore, the polymer block (A) may contain other monomer units other than the unit of the vinyl compound containing the isoprene monomer unit, the aromatic vinyl monomer unit, and the amino group as the functional group that can interact with the silica. Examples of the other compounds constituting the other monomer units include a chain olefin compound, such as ethylene, propylene, and 1-butene; a cyclic olefin compound, such as cyclopentene and 2-norbornene; a conjugated diene compound other than isoprene, such as 1,3-butadiene, 2,3-dimethyl-1,3-butadiene, 2-chloro-1,3-butadiene, 1-3-pentadiene, and 1,3-hexadiene; and a non-conjugated diene compound, such as 1,5-hexadiene, 1,6-heptadiene, 1,7-octadiene, dicyclopentadiene, and 5-ethylidene-2-norbornene. Content of the other monomer units in the polymer block (A) is preferably 20 mass% or less, more preferably 10 mass% or less, and even more preferably 6 mass% or less.

### Weight Average Molecular Weight (Mw)

The weight average molecular weight (Mw) of the polymer block (A) is in the range of from 1000 to 30000, preferably in the range of from 1500 to 20000, and more preferably in the range of from 2000 to 10000. When the weight average molecular weight (Mw) of the polymer block (A) is excessively small, the effect of suppressing adhesion to the roll and the effects of improving low heat build-up and steering stability cannot be obtained. Meanwhile, the excessively large weight average molecular weight (Mw) of the polymer block (A) reduces the low heat build-up of the obtained rubber crosslinked product.

### Mw/Mn

The molecular weight distribution expressed as the ratio (Mw/Mn) of the weight average molecular weight (Mw) to the number average molecular weight (Mn) of the polymer block (A) is preferably from 1.0 to 1.5, and more preferably from 1.0 to 1.3. When the value of molecular weight distribution (Mw/Mn) of the polymer block (A) is within the above range, the conjugated diene rubber is easy to produce.

In the present specification, the weight average molecular weight (Mw) and the number average molecular weight (Mn) can be obtained by gel permeation chromatography (GPC) measurement in terms of polystyrene.

### Polymer Block (B)

The polymer block (B) only needs to contain 1,3-butadiene monomer units (preferably one that mainly contains 1,3-butadiene monomer units) and is not particularly limited. The polymer block (B) may be constituted of only 1,3-butadiene monomer units or may be constituted of 1,3-butadiene monomer units and monomer units other than 1,3-butadiene monomer units. The monomer unit other than 1,3-butadiene monomer unit in this case is suitably an aromatic vinyl monomer unit, and the polymer block (B) according to an embodiment of the present invention preferably contains the aromatic vinyl monomer units in addition to 1,3-butadiene monomer units.

### 1,3-Butadiene Monomer Unit Content

The content of 1,3-butadiene monomer unit (1,3-butadiene monomer unit content) in the polymer block (B) is preferably from 55 to 65 mass%, more preferably from 55 to 63 mass%, and even more preferably from 55 to 60 mass%. By setting the 1,3-butadiene monomer unit content in the polymer block (B) to be within the range described above, the conjugated diene rubber can be further easily manufactured.

### Vinyl Bond Content in 1,3-Butadiene Monomer Unit

The vinyl bond content in the 1,3-butadiene monomer unit in the polymer block (B) is preferably from 10 to 50 mass%, more preferably from 15 to 40 mass%, and particularly preferably from 20 to 35 mass%. By setting the vinyl bond content in the 1,3-butadiene monomer unit in the polymer block (B) to be within the range described above, the obtained rubber crosslinked product can be further excellent due to low heat build-up.

### Aromatic Vinyl Compound to Form Aromatic Vinyl Monomer Unit

As the aromatic vinyl compound to form the aromatic vinyl monomer unit, the ones described as examples in the description of the polymer block (A) described above can be used, and styrene is preferable among the aromatic vinyl compounds described above. The aromatic vinyl monomer unit content in the polymer block (B) is preferably from 35 to 45 mass%, and more preferably from 40 to 45 mass%.

### Unit of Vinyl Compound Containing Amino Group as Functional Group that Can Interact with Silica

In addition, the specific conjugated diene rubber contains the units of the vinyl compound containing the amino group as the functional group that can interact with the silica in at least one of the polymer block (A) and the polymer block (B) described above. In the specific conjugated diene rubber, the unit of the vinyl compound containing the amino group as the functional group that can interact with the silica may be any of an aspect of being contained only in the polymer block (A), an aspect of being contained only in the polymer block (B), and an aspect of being contained in both of the polymer block (A) and the polymer block (B). Since the effects of an embodiment of the present invention are more excellent, at least the polymer block (B) preferably contains the units of the vinyl compound containing the amino group as the functional group that can interact with the silica in the specific conjugated diene rubber.

### Vinyl Compound Containing Amino Group as Functional Group that Can Interact with Silica

As the vinyl compound containing the amino group as the functional group that can interact with the silica to form the units of the vinyl compound containing the amino group as the functional group that can interact with the silica, the ones described as examples in the description of the polymer block (A) described above can be used, and the ones described as examples in the description of the polymer block (A) described above can be suitably used.

### Content

The content of the units of the vinyl compound containing the amino group as the functional group that can interact with the silica in the polymer block (B) is not particularly limited. The content with respect to all monomer units constituting the polymer block (B) is preferably adjusted to be in the range of from 0.01 to 20 mass%, more preferably in the range of from 0.02 to 2 mass%, and particularly in the range of from 0.05 to 1 mass%.

### Other Monomer Units

Furthermore, the polymer block (B) may contain other monomer units other than the unit of the vinyl compound containing the 1,3-butadiene monomer unit, the aromatic vinyl monomer unit, and the amino group as the functional group that can interact with the silica. As the other compounds constituting the other monomer units, isoprene can be used in addition to the similar compounds exemplified for the polymer block (A) described above (except for 1,3-butadiene). Content of the other monomer units in the polymer block (B) is preferably 40 mass% or less, more preferably 35 mass% or less, and even more preferably 25 mass% or less.

### Mass Ratio of Polymer Block (A) to Polymer Block (B)

The mass ratio of the polymer block (A) to the polymer block (B) in the specific conjugated diene rubber (when there are a plurality of polymer blocks (A) and (B), the mass ratio is based on the total mass of the respective polymer blocks) is preferably from 0.001 to 0.2, more preferably from 0.005 to 0.1, and particularly preferably from 0.01 to 0.05, as (mass of the polymer block (A))/(mass of the polymer block (B)). By setting the mass ratio of the polymer block (A) to the polymer block (B) within the range described above, it is possible to achieve satisfactory balance between wet grip properties and low heat build-up of the obtained rubber crosslinked product.

### Content of Each Unit

### 1,3-Butadiene Monomer Unit Content

The content of 1,3-butadiene monomer units of the entire specific conjugated diene rubber (1,3-butadiene monomer unit content) is not particularly limited. Since the effects of an embodiment of the present invention are more excellent, the content is preferably from 55 to 65 mass%, more preferably from 55 to 63 mass%, and even more preferably from 55 to 60 mass%. Here, the 1,3-butadiene monomer unit content of the entire specific conjugated diene rubber refers to the content of 1,3-butadiene monomer units with respect to all monomer units constituting the specific conjugated diene rubber.

### Aromatic Vinyl Monomer Unit Content

As described above, the content of the aromatic vinyl monomer unit of the entire specific conjugated diene rubber (aromatic vinyl monomer unit content) is from 30 to 45 mass%. Here, the aromatic vinyl monomer unit content of the entire specific conjugated diene rubber refers to the content of the aromatic vinyl monomer unit with respect to all monomer units constituting the specific conjugated diene rubber.

Since the effects of an embodiment of the present invention are more excellent, the aromatic vinyl monomer unit content of the entire specific conjugated diene rubber is preferably from 35 to 45 mass%, and more preferably from 40 to 45 mass%.

### Content of Units of Vinyl Compound Containing Amino Group as Functional Group that Can Interact with Silica

The content of the units of the vinyl compound (for example, bis(diethylamino)methylvinylsilane monomer unit content) containing the amino group as the functional group that can interact with the silica described above in the entire specific conjugated diene rubber is not particularly limited, but is preferably from 0.01 to 20 mass%, more preferably from 0.02 to 2 mass%, and even more preferably from 0.05 to 1 mass% from the perspective of achieving superior effects of an embodiment of the present invention.

### Vinyl Bond Content

The vinyl bond content (hereinafter, also referred to simply as "vinyl bond content in the entire specific conjugated diene rubber") in the conjugated diene monomer units (for example, the isoprene monomer unit and the 1,3-butadiene monomer unit) in the entire specific conjugated diene rubber is from 15 to 35 mass%. Among these, from the perspective of achieving superior effects of an embodiment of the present invention, the content is preferably from 20 to 35 mass% and more preferably from 25 to 35 mass%. By setting the vinyl bond content in the entire specific conjugated diene rubber to be within the range described above, the low heat build-up of the obtained rubber crosslinked product can be further excellent.

### Modified Structure by Siloxane Compound

As described above, the specific conjugated diene rubber has the modified structure by the siloxane compound at least at one terminal. Note that the modified structure by the siloxane compound may be introduced via a modified structure by another modifying agent.

### Suitable Aspect

The siloxane compound only needs to have a siloxane structure (-Si-O-) as a main chain and is not particularly limited, but is preferably organosiloxane having an organic group in the side chain and more preferably polyorganosiloxane represented by General Formula (4) below.

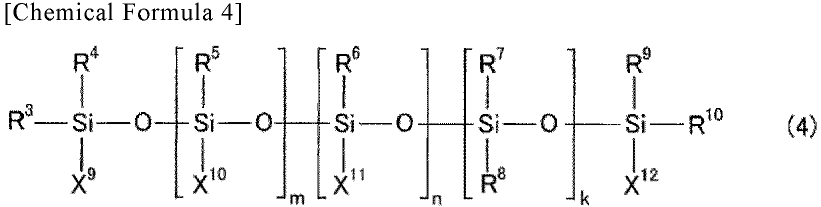

In General Formula (4) above, R³ to R¹⁰ are alkyl groups having from 1 to 6 carbons or aryl groups having from 6 to 12 carbons and may be the same or different from one another. X⁹ and X¹² are any of groups selected from the group consisting of alkyl groups having from 1 to 6 carbons, aryl groups having from 6 to 12 carbons, alkoxy groups having from 1 to 5 carbons, and epoxy group-containing groups having from 4 to 12 carbons and may be the same or different from one another. X¹⁰ is an alkoxy group having from 1 to 5 carbons or an epoxy group-containing group having from 4 to 12 carbons, and when X¹⁰ is plural, they may be the same or different from one another. X¹¹ is a group containing 2 to 20 alkylene glycol repeating units, and, when there are a plurality of X¹¹, they may be the same or different from one another. m is an integer from 1 to 200, n is an integer from 0 to 200, k is an integer from 0 to 200, and m +n + k is 1 or more.

Examples of the alkyl groups having from 1 to 6 carbons that may constitute the R³ to R¹⁰ and X⁹ and X¹² in the polyorganosiloxane represented by General Formula (4) above include a methyl group, an ethyl group, an n-propyl group, an isopropyl group, a butyl group, a pentyl group, a hexyl group, and a cyclohexyl group. Examples of the aryl groups having from 6 to 12 carbons include a phenyl group and a methylphenyl group. Among these, a methyl group and an ethyl group are preferred from the perspective of easiness of production of the polyorganosiloxane itself.

Examples of the alkoxyl groups having from 1 to 5 carbons that may constitute the X⁹, X¹⁰, and X¹² in the polyorganosiloxane represented by General Formula (4) above include a methoxy group, an ethoxy group, a propoxy group, an isopropoxy group, and a butoxy group. Among these, a methoxy group and an ethoxy group are preferred from the perspective of easiness of production of the polyorganosiloxane itself.

Additionally, examples of the epoxy group-containing group having from 4 to 12 carbons that may constitute X⁹, X¹⁰, and X¹² in the polyorganosiloxane represented by General Formula (4) include groups represented by General Formula (5) below.

-Z¹-Z²-E (5)

In General Formula (5) above, Z¹ is an alkylene group or an alkyl arylene group having from 1 to 10 carbons; Z² is a methylene group, a sulfur atom, or an oxygen atom; and E is an epoxy group-containing hydrocarbon group having from 2 to 10 carbons.

In the group represented by General Formula (5) above, preferably, Z² is an oxygen atom; more preferably, Z² is an oxygen atom and E is a glycidyl group; and particularly preferably, Z¹ is an alkylene group having from 1 to 3 carbons, Z² is an oxygen atom, and E is a glycidyl group.

In the polyorganosiloxane represented by General Formula (4) above, of the above, X⁹ and X¹² are preferably epoxy group-containing groups having from 4 to 12 carbons or alkyl groups having from 1 to 6 carbons. In addition, of the above, an epoxy group-containing group having from 4 to 12 carbons is preferable as X¹⁰. Furthermore, X⁹ and X¹² are alkyl groups having from 1 to 6 carbons, and X¹⁰ is more preferably an epoxy group-containing group having from 4 to 12 carbons.

In the polyorganosiloxane represented by General Formula (4) above, a group represented by General Formula (6) below is preferable as X¹¹, that is, a group containing from 2 to 20 repeating alkylene glycol units.

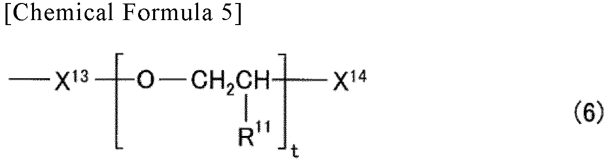

In General Formula (6) above, t is an integer from 2 to 20, X¹³ is an alkylene group or an alkyl arylene group having from 2 to 10 carbons, R¹¹ is a hydrogen atom or a methyl group, and X¹⁴ is an alkoxy group or an aryloxy group having from 1 to 10 carbons. Among these, preferably, t is an integer from 2 to 8, X¹³ is an alkylene group having 3 carbons, R¹¹ is a hydrogen atom, and X¹⁴ is a methoxy group.

In the polyorganosiloxanes represented by General Formula (4) above, m is an integer of from 1 to 200, preferably an integer of from 20 to 150, and more preferably an integer of from 30 to 120. When m is from 1 to 200, production of the polyorganosiloxane itself represented by General Formula (4) above will be further easy and it will be further easy to handle the polyorganosiloxane without viscosity being excessively high.

In the polyorganosiloxanes represented by General Formula (4) above, n is an integer of from 0 to 200, preferably an integer of from 0 to 150, and more preferably an integer of from 0 to 120. K is an integer of from 0 to 200, preferably an integer of from 0 to 150, and more preferably from 0 to 130. The total number of m, n, and k is 1 or more, preferably from 3 to 400, more preferably from 20 to 300, and particularly preferably from 30 to 250. When the total number of m, n and k is 1 or more, the reaction between the polyorganosiloxane represented by General Formula (4) above and the conjugated diene polymer chain having an active terminal will be more likely to proceed. Further, when the total number of m, n and k is 400 or less, production of the polyorganosiloxane itself represented by General Formula (4) above will be easy, and it will be easy to handle the polyorganosiloxane without viscosity being excessively high.

### Weight Average Molecular Weight (Mw)

The weight average molecular weight (Mw) of the entire specific conjugated diene rubber is in the range of from 50000 to 5000000, preferably in the range of from 75000 to 3000000, and more preferably in the range of from 100000 to 1000000. By setting the weight average molecular weight of the entire specific conjugated diene rubber to be within the range described above, blending of the silica into the rubber composition containing the conjugated diene rubber is facilitated, the processability of the rubber composition can be further enhanced, and further the low heat build-up of the obtained rubber crosslinked product can be further improved.

### Mw/Mn

The entire molecular weight distribution expressed as the ratio (Mw/Mn) of the weight average molecular weight (Mw) to the number average molecular weight (Mn) of the entire specific conjugated diene rubber is preferably from 1.1 to 3.0, more preferably from 1.2 to 2.5, and particularly preferably from 1.2 to 2.2. By setting the molecular weight distribution (Mw/Mn) within the range described above, the low heat build-up of the obtained rubber crosslinked product can be further improved.

### Mooney Viscosity

Furthermore, the Mooney viscosity (ML₁₊₄, 100°C) of the specific conjugated diene rubber is preferably from 20 to 100, more preferably from 30 to 90, particularly preferably from 35 to 80. When the conjugated diene rubber is obtained as an oil-extended rubber, the Mooney viscosity of that oil-extended rubber is the same as the ranges above.

### Glass Transition Temperature (Tg)

While the glass transition temperature (Tg) of the specific conjugated diene rubber is not particularly limited, it is preferably from 20 to -110°C, and more preferably from 10 to -70°C. The glass transition temperature of the specific conjugated diene rubber can be adjusted as appropriate, for example, by adjusting the aromatic vinyl monomer unit content in the conjugated diene rubber and the vinyl bond content in the conjugated diene monomer unit portion.

### Production Method

The specific conjugated diene rubber can be produced through, for example, a step of polymerizing a monomer (a) containing isoprene in an inert solvent with polymerization initiator and forming a polymer block (A) having an active terminal (Step A), a step of mixing the obtained polymer block (A) having the active terminal and a monomer (b) containing 1,3-butadiene and continuing the polymerization reaction to obtain a conjugated diene polymer chain including the polymer block (A) and the polymer block (B) and having the active terminal (Step B), and a step of reacting a siloxane compound to the obtained active terminal of the conjugated diene polymer chain having the active terminal (Step C).

### Step of Forming Polymer Block (A) Having Active Terminal (Step A)

### Monomer (a)

The monomer (a) to form the polymer block (A) only needs to contain isoprene, and a monomer according to the monomer composition (the monomer composition described above) of the polymer block (A) to be formed may be used. For example, when the polymer block (A) is composed of isoprene monomer units and aromatic vinyl monomer units, the monomer (a) only needs to contain the isoprene and the aromatic vinyl compound. In addition to the isoprene monomer units and the aromatic vinyl monomer units, when the polymer block (A) has the units of the vinyl compound containing the amino group as the functional group that can interact with silica, the monomer (a) only needs to contain a vinyl compound containing the amino group as the functional group that can interact with the silica, in addition to the isoprene and the aromatic vinyl compound.

### Inert Solvent

The inert solvent used in the polymerization of the monomer (a) containing the isoprene to form the polymer block (A) is normally used in solution polymerization and is not particularly limited as long as the inert solvent does not hinder the polymerization reaction. Specific examples of the inert solvent include chain or branch aliphatic hydrocarbon, such as propane, n-butane, isobutane, n-pentane isopentane, n-hexane, propene, 1-butene, isobutene, trans-2-butene, cis-2-butene, 1-pentene, 2-pentene, 1-hexene, 2-hexene, and n-heptane; alicyclic hydrocarbon, such as cyclopentane and cyclohexane; aromatic hydrocarbons, such as benzene, ethylbenzene, toluene, and xylene; and an ether compound, such as tetrahydrofuran and diethyl ether. A single inert solvent may be used alone, or two or more inert solvents may be used in combination. The used amount of the inert solvent is not particularly limited, but is an amount such that the monomer concentration is, for example, from 1 to 80 mass%, and preferably from 5 to 50 mass%.

### Polymerization Initiator

The polymerization initiator used to form the polymer block (A) is not particularly limited as long as the polymerization initiator can polymerize a monomer (a) containing isoprene to give a polymer chain having an active terminal. Specific examples thereof can include polymerization initiators each containing an organic alkali metal compound, an organic alkaline earth metal compound, a lanthanide-series metal compound, or the like as a primary catalyst. Examples of the organic alkali metal compound include a reaction product of n-butyl lithium, sec-butyllithium, t-butyl lithium, hexyllithium, phenyllithium ethyllithium, n-propyl lithium, isopropyl lithium, tert-octyl lithium, n-decyl lithium, 2-naphthyllithium, 2-butylphenyl-lithium, 4-phenylbutyllithium, hexyl lithium, cyclopentyllithium, diisopropenylbenzene, and butyllithium, an organic monolithium compound, such as stilbene lithium; an organic poly-lithium compounds; such as dilithiomethane, 1,4-dilithiobutane, 1,4-dilithio-2-ethylcyclohexane, 1,3,5-trilithiobenzene, 1,3,5-tris(lithiomethyl)benzene, a reactant of sec-butyllithium and diisopropenylbenzene, a reactant of n-butyllithium, 1-3-butadiene, and divinylbenzene, and a reactant of n-butyllithium and a polyacethylene compound; an organic sodium compound, such as sodium naphthalene; an organic potassium compound, such as potassium naphthalene; an organic rubidium compound; and an organic cesium compound. Besides, the examples include alkoxide, such as lithium, sodium, and potassium, sulphonate, carbonate, and amide. Also, other organometal compounds may be used together. Furthermore, the known organic alkali metal compounds disclosed in, for example, U.S. Patent No. 5708092, British Patent No. 2241239, and U.S. Patent No. 5527753 can also be used.

Examples of the organic alkali earth metal compound include di-n-butylmagnesium, di-n-hexylmagnesium, diethoxycalcium, calcium distearate, di-t-butoxystrontium, diethoxybarium, diisopropoxybarium, diethylmercaptobarium, di-t-butoxybarium, diphenoxybarium, diethylaminobarium, barium distearate, and diketylbarium. Examples of the polymerization initiators having a lanthanide-series metal compound as a primary catalyst include polymerization initiators containing a primary catalyst of a lanthanide-series metal salt containing a lanthanide-series metal such as lanthanum, cerium, praseodymium, neodymium, samarium, and gadolinium, and a carboxylic acid or phosphorus-containing organic acid, together with a promoter such as an alkylaluminum compound, organoaluminum hydride compound, or organoaluminum halide compound. Among these polymerization initiators, organic monolithium compounds and organic poly-lithium compounds are preferably used, organic monolithium compounds are more preferably used, and n-butyllithium is particularly preferably used, from the perspectives of ease of industrial acquisition and ease of control of polymerization reaction. Furthermore, the organic alkali metal compound may be used as an organic alkali metal amide compound after first reacting it with a secondary amine, such as dibutylamine, dihexylamine, dibenzylamine, pyrrolidine, piperidine, hexamethyleneimine, and heptamethyleneimine. A single polymerization initiator may be used alone, or two or more polymerization initiators may be used in combination. Although not particularly limited, examples of the organic alkali metal amide compound include, lithium hexamethyleneimide, lithium pyrrolidide, lithium piperidide, lithium heptamethyleneimide, lithium dodecamethylene imide, lithium dimethylamide, lithium diethylamide, lithium dibutylamide, lithium dipropylamide, lithium diheptylamide, lithium dihexylamide, lithium dioctylamide, lithium di-2-ethylhexylamide, lithium didecylamide, lithium-N-methylpiperazide, lithium ethylpropylamide, lithium ethylbutyramide, lithium ethylbenzylamide, and lithium methylphenethylamide.

### Used Amount

The used amount of the polymerization initiator may be determined according to the targeted molecular weight, but is preferably from 4 to 250 mmol, more preferably from 6 to 200 mmol, and particularly preferably from 10 to 70 mmol, per 100 g of the monomer (a) containing isoprene.

### Polymerization Temperature when Polymerizing Monomer (a)

The polymerization temperature when polymerizing the monomer (a) containing isoprene is preferably from -80 to 150°C, more preferably from 0 to 100°C, and even more preferably from 20 to 90°C. The polymerization mode may be any mode such as a batch mode or a continuous mode. Furthermore, the bonding mode when the polymer block (A) is a copolymer chain can be a variety of bonding modes, such as blocky, tapered, and random bonding modes.

### Polar Compound

In polymerization of the monomer (a), to adjust the vinyl bond content in the isoprene monomer unit in the polymer block (A), the polar compound is preferably added to the inert solvent at the time of polymerization. Examples of the polar compound include ether compounds such as dibutylether, tetrahydrofuran, and 2,2-di(tetrahydrofuryl)propane; tertiary amines such as tetramethylethylenediamine; alkali metal alkoxides; and phosphine compounds. Among these, ether compounds and tertiary amines are preferable, tertiary amines are more preferable, and tetramethylethylenediamine is particularly preferable. A single polar compound may be used alone, or two or more polar compounds may be used in combination. The amount of the polar compound used should be determined according to the targeted vinyl bond content, but is preferably from 0.01 to 30 mol, and more preferably from 0.05 to 10 mol, relative to 1 mol of the polymerization initiator. When the amount of the polar compound used is within this range, it is easy to adjust the vinyl bond content of the isoprene monomer unit, and problems due to deactivation of the polymerization initiator tend not to occur. In addition, the vinyl bond content of the isoprene monomer unit can be increased by increasing the amount of polar the compound used within the range described above.

### Step of Obtaining Conjugated Diene Polymer Chain Having Active Terminal (B)

Next, the polymer block (A) having the active terminal obtained by polymerizing the monomer (a) containing the isoprene and the monomer (b) containing 1,3-butadiene are mixed and the polymerization reaction is continued. Thus, the polymer block (B) can be formed continuous with the polymer block (A), thus ensuring obtaining the conjugated diene polymer chain including the polymer block (A) and the polymer block (B) and having the active terminal including (Step B). Note that the formed polymer block (B) has the active terminal. Meanwhile, the active terminal is lost from the polymer block (A).

### Monomer (b)

The monomer (b) to form the polymer block (B) only needs to contain 1,3-butadiene, and a monomer according to the monomer composition (the monomer composition described above) of the polymer block (B) to be formed may be used. For example, when the polymer block (B) is composed of 1,3-butadiene monomer units and aromatic vinyl monomer units, the monomer (b) only needs to contain the 1,3-butadiene and the aromatic vinyl compound. In addition to the 1,3-butadiene monomer unit and the aromatic vinyl monomer unit, when the polymer block (B) has the unit of vinyl compound containing the amino group as the functional group that can interact with silica, the monomer (b) only needs to contain a vinyl compound containing the amino group as the functional group that can interact with the silica, in addition to the 1,3-butadiene and the aromatic vinyl compound.

### Vinyl Compound Containing Amino Group as Functional Group that Can Interact with Silica

Note that the specific conjugated diene rubber contains the unit of the vinyl compound containing the amino group as the functional group that can interact with the silica in at least one of the polymer block (A) and the polymer block (B) described above. Therefore, in the production method described above, at least one of the monomer (a) containing the isoprene used to form the polymer block (A) and the monomer (b) containing the 1,3-butadiene used to form the polymer block (B) may contain the vinyl compound containing the amino group as the functional group that can interact with silica.

### Inert Solvent

The inert solvent used for polymerization of the monomer (b) containing 1,3-butadiene to form the polymer block (B) is not particularly limited, and the one similar to the inert solvent described above can be used.

### Used Amount of Polymer Block (A) Having Active Terminal

The used amount of the polymer block (A) having the active terminal when the polymer block (B) is formed may be determined according to the targeted molecular weight, but is preferably in the range of from 0.1 to 5 mmol, more preferably from 0.15 to 2 mmol, and even more preferably from 0.2 to 1.5 mmol, per 100 g of the monomer (b) containing 1,3-butadiene.

### Method of Mixing Polymer Block (A) and Monomer (b) Containing 1,3-Butadiene

The method of mixing the polymer block (A) and the monomer (b) containing 1,3-butadiene is not particularly limited. The polymer block (A) having an active terminal may be added to a solution of the monomer (b) containing 1,3-butadiene, or the monomer (b) containing 1,3-butadiene may be added to a solution of the polymer block (A) having an active terminal. From the perspective of controlling polymerization, the method in which the polymer block (A) having the active terminal is added to the solution of the monomer (b) containing 1,3-butadiene is preferable.

### Polymerization Temperature, Polymerization Mode

The polymerization temperature when polymerizing the monomer (b) containing 1,3-butadiene is preferably from -80 to 150°C, more preferably from 0 to 100°C, and even more preferably from 20 to 90°C. The polymerization mode may be any mode such as a batch mode or a continuous mode. When the polymer block (B) is a copolymer chain, a batch mode is preferable in that randomness of the bond is easily controlled.

### Bonding Mode

Furthermore, the bonding mode between the respective monomers when the polymer block (B) is a copolymer chain can be a variety of bonding modes such as blocky, tapered, and random bonding modes. Among these, the random bonding mode is preferred. By making the random bonding mode, the low heat build-up of the obtained rubber crosslinked product can be further improved.

### Polar Compound

To adjust the vinyl bond content of the 1,3-butadiene monomer unit in the polymer block (B), a polar compound is preferably added to the inert solvent at the time of polymerization, as is the case with adjustment of the vinyl bond content in the isoprene monomer unit in the polymer block (A). However, a polar compound does not have to be added again when a polar compound was already added to the inert solvent in an amount sufficient to adjust the vinyl bond content of the 1,3-butadiene monomer unit in the polymer block (B) at the time of preparation of the polymer block (A). As the polar compound used to adjust the vinyl bond content, the one similar to the polar compound described above can be used. The used amount of the polar compound may be determined according to the targeted vinyl bond content, but may be adjusted to be in the range preferably from 0.01 to 100 mol, and more preferably from 0.1 to 30 mol, relative to 1 mol of the polymerization initiator used for the first polymerization reaction (polymerization reaction for forming the first polymer block (A)). When the used amount of the polar compound is within this range, it is easy to adjust the vinyl bond content in the 1,3-butadiene monomer unit, and problems due to deactivation of the polymerization initiator are less likely to occur.

### Conjugated Diene Polymer Chain Having Active Terminal

In this way, the conjugated diene polymer chain having an active terminal and having the polymer block (A) and the polymer block (B), can be obtained. In an embodiment of the present invention, the conjugated diene polymer chain having an active terminal is, from the perspective of productivity, constituted by the polymer block (A)-the polymer block (B), and the terminal of the polymer block (B) is preferably an active terminal. However, the conjugated diene polymer chain may have a plurality of polymer blocks (A) or may have other polymer blocks. For example, the conjugated diene polymer chain having an active terminal, for example, the polymer block (A)-the polymer block (B)-the polymer block (A), is indicated. In this case, an active terminal will be formed at the terminal of the polymer block (A) formed in continuity with the polymer block (B). When the polymer block (A) is formed on the active terminal side of the conjugated diene polymer chain, the used amount of isoprene is preferably from 10 to 100 mol, more preferably from 15 to 70 mol, and particularly preferably from 20 to 35 mol relative to 1 mol of the polymerization initiator used for the first polymerization reaction (polymerization reaction for forming the first polymer block (A)).

### Step of Reacting Siloxane Compound to Active Terminal of Conjugated Diene Polymer Chain Having Active Terminal (Step C)

Next, by reacting the siloxane compound to the active terminal of the obtained conjugated diene polymer chain having the active terminal, the modified structure by the siloxane compound is introduced into the terminal of the conjugated diene polymer chain.

### Used Amount of Siloxane Compound

The used amount of the siloxane compound when the conjugated diene polymer chain having the active terminal is reacted with the siloxane compound is preferably from 0.01 to 10 mol and more preferably from 0.1 to 5 mol relative to 1 mol of the polymerization initiator used in the first polymerization reaction (polymerization reaction for forming the first polymer block (A)). The used amount of the siloxane compound within the range allows further improving the low heat build-up of the obtained rubber crosslinked product. Note that the number of moles per siloxane structure (-Si-O-) is preferably within the range.

### Method of Reacting Siloxane Compound and Conjugated Diene Polymer Chain Having Active Terminal

The method of reacting the siloxane compound and the conjugated diene polymer chain having an active terminal is not particularly limited, and examples thereof include a method of mixing them in a solvent in which they can each be dissolved. As examples of the solvent used in this case, those exemplified as the inert solvent used in the polymerization reaction described above can be used. In addition, in this case, a method of adding the siloxane compound to a polymerization solution used for the polymerization to obtain the conjugated diene polymer chain having an active terminal is convenient and preferable. In addition, in this case, the siloxane compound is preferably dissolved in the inert solvent and added into the polymerization system, and the solution concentration thereof is preferably in the range of from 1 to 50 mass%. The reaction temperature is not particularly limited, but is normally from 0 to 120°C, and the reaction time is not particularly limited, but is normally from 1 minute to 1 hour.

### Timing to Add Siloxane Compound

The timing of adding the siloxane compound to a solution containing the conjugated diene polymer chain having an active terminal is not particularly limited, but it is desirable to add the siloxane compound to this solution in a state where the polymerization reaction has not been completed and the solution containing the conjugated diene polymer chain having an active terminal contains a monomer as well. More specifically, the siloxane compound is desirably added to the solution containing the conjugated diene polymer chain having an active terminal while the solution is in a state where it contains preferably 100 ppm or more, and more preferably from 300 to 50000 ppm, of the monomer. By adding the siloxane compound in this way, it is possible to control the reaction well by suppressing side reactions between the conjugated diene polymer chain having an active terminal and, for example, impurities contained in the polymerization system. Note that, to further enhance the processability of the obtained rubber composition, the siloxane compound may be added to a solution containing the conjugated diene polymer chain having the active terminal, and after the reaction, an organic metal compound may be further mixed. This allows enhancing the processability of the obtained rubber composition (compound mooney can be reduced low). **In** addition, in this case, after mixing the organometal compound, the siloxane compound may be further newly added for additional reaction. Examples of the organometal compound include a reaction product of n-butyl lithium, sec-butyllithium, t-butyl lithium, hexyllithium, phenyllithium, ethyllithium, n-propyl lithium, isopropyl lithium, tert-octyl lithium, n-decyl lithium, 2-naphthyllithium, 2-butylphenyl-lithium, 4-phenylbutyllithium, hexyl lithium, cyclopentyllithium, diisopropenylbenzene, and butyllithium, and an organic monolithium compound, such as stilbene lithium.

In this way, by reacting the siloxane compound to the active terminal of the conjugated diene polymer chain having the active terminal, the modified structure by the siloxane compound can be introduced into at least one terminal of the conjugated diene polymer chain. In the conjugated diene polymer chain after the reaction, the modified structure by the siloxane compound has been introduced into the polymer chain terminal. However, except for this, an unmodified conjugated diene polymer chain, which has not been modified by the siloxane compound, may be contained.

Note that, as the conjugated diene polymer chain having the active terminal, the modified structure by the siloxane compound may be introduced into the terminal of the polymer block (A) by reacting the siloxane compound with the terminal of the polymer block (A) using the one in which the terminal of the polymer block (A) is the active terminal (for example, the polymer chain represented by the polymer block (A)-polymer block (B)-polymer block (A)). Alternatively, the modified structure by the siloxane compound may be introduced into the terminal of the polymer block (B) by reacting the siloxane compound with the terminal of the polymer block (B) using the one in which the terminal of the polymer block (B) is the active terminal (for example, the polymer chain represented by the polymer block (A)-polymer block (B)). From the perspective of further enhancing the low heat build-up of the obtained rubber crosslinked product, it is preferable to introduce the modified structure by the siloxane compound into the terminal of the polymer block (B) by reacting the siloxane compound with the terminal of the polymer block (B).

### Coupling

Furthermore, before the siloxane compound is reacted with the conjugated diene polymer chain having the active terminal or after the siloxane compound is reacted, while the conjugated diene polymer chain having the active terminal remains, a portion of the active terminal of the conjugated diene polymer chain having the active terminal may be added in the polymerization system, such as a commonly used coupling agent conventionally, to perform coupling, as long as the effects of an embodiment of the present invention are not inhibited.

### Deactivation

After the siloxane compound is reacted with the conjugated diene polymer chain having the active terminal, a polymerization terminator of, for example, alcohol, such as methanol, ethanol, and isopropanol, or water is preferably added to deactivate the unreacted active terminal.

### Additives

After the active terminal of the conjugated diene polymer chain is deactivated, as desired, for example, anti-aging agents, such as phenol-based stabilizers, phosphorus-based stabilizers, or sulfur-based stabilizers, crumbling agents, and antiscale agents are added to a reaction solution containing the conjugated diene rubber solution having the modified structure by the siloxane compound at the terminal. After that, the polymerization solvent is separated from the reaction solution by, for example, direct drying or steam stripping and the solid conjugated diene rubber having the modified structure by the siloxane compound at the terminal is recovered. Furthermore, as desired, an extender oil may be blended to form the conjugated diene rubber as oil-extended rubber. Examples of the extender oil include paraffin-based, aromatic, and naphthene-based petroleum-based softeners, plant-based softeners, and fatty acids. When a petroleum-based softener is used, the content of polycyclic aromatics extracted by the method of IP346 (test method of THE INSTITUTE PETROLEUM in the UK) is preferably less than 3%. When an extender oil is used, the used amount is normally from 5 to 100 parts by mass per 100 parts by mass of the conjugated diene rubber.

### Content

The content of the specific conjugated diene rubber in the rubber component is 35 mass% or more as described above. Among these, from the perspective of achieving superior effects of an embodiment of the present invention, the content is preferably from 40 to 85 mass% and more preferably from 45 to 80 mass%.

### [2] Natural Rubber

As described above, the rubber component contains the natural rubber.

### Molecular Weight

The weight average molecular weight (Mw) of the natural rubber is not particularly limited, but is preferably from 50000 to 5000000, more preferably from 75000 to 3000000, and even more preferably from 100000 to 1000000, from the perspective of achieving superior effects of an embodiment of the present invention.

### Content

The content of the natural rubber in the rubber component is 10 mass% or more as described above. Among these, from the perspective of achieving superior effects of an embodiment of the present invention, the content is preferably 20 mass% or more, and more preferably 25 mass% or more. The upper limit of the content of the natural rubber in the rubber component is preferably 65 mass% or less, more preferably 50 mass% or less, and even more preferably 40 mass% or less from the perspective of achieving superior effects of an embodiment of the present invention.

### [3] Content Ratio of Natural Rubber to Specific Conjugated Diene Rubber

The proportion of the content of the natural rubber described above to the content of the specific conjugated diene rubber described above in the rubber component (the natural rubber/specific conjugated diene rubber) is preferably from 10 to 70 mass%, more preferably from 20 to 60 mass%, and even more preferably from 30 to 50 mass%, from the perspective of achieving superior effects of an embodiment of the present invention.

### [4] Other Rubber Components

The rubber component may contain a rubber component (another rubber component) that does not correspond to any of the specific conjugated diene rubber described above or the natural rubber described above.

Examples of the other rubber components include isoprene rubber (IR), butadiene rubber (BR), styrene-butadiene rubber (SBR) other than the specific conjugated diene rubber described above, acrylonitrile-butadiene copolymer rubber (NBR), butyl rubber (IIR), halogenated butyl rubber (Br-IIR, Cl-IIR), and chloroprene rubber (CR). Among these, from the perspective of achieving superior effects of an embodiment of the present invention, the styrene-butadiene rubber (SBR) other than the specific conjugated diene rubber described above is preferable.

### Molecular Weight

The weight average molecular weight (Mw) of the other rubber component is not particularly limited, but is preferably from 50000 to 5000000, more preferably from 75000 to 3000000, and even more preferably from 100000 to 1000000, from the perspective of achieving superior effects of an embodiment of the present invention.

### Content

The content of the other rubber component in the rubber component is not particularly limited, but from the perspective of achieving superior effects of an embodiment of the present invention, the content is preferably from 0 to 55 mass%, more preferably from 10 to 50 mass%, and even more preferably from 20 to 40 mass%.

### [II] Silica

The silica contained in the composition according to an embodiment of the present invention is not particularly limited, and any conventionally known silica that is blended in rubber compositions for the use in, for example, tires can be used.

Specific examples of the silica include wet silica, dry silica, fumed silica, and diatomaceous earth. Among these, from the perspective of achieving superior effects of an embodiment of the present invention, the silica is preferably wet silica. One type of the silica may be used alone, or two or more types of the silicas may be used in combination.

### [1] Content

In the composition according to an embodiment of the present invention, the content of the silica is from 50 to 150 parts by mass per 100 parts by mass of the rubber component described above. Among these, from the perspective of achieving superior effects of an embodiment of the present invention, the content is preferably from 60 to 100 parts by mass.

### [2] Suitable Aspect

From the perspective of achieving superior effects of an embodiment of the present invention, the silica preferably contains silica (specific silica) having a cetyltrimethylammonium bromide (CTAB) adsorption specific surface area of 190 m²/g or more by 20 parts by mass or more. Among these, from the perspective of achieving superior effects of an embodiment of the present invention, the specific silica is preferably contained by from 50 to 150 parts by mass and more preferably from 60 to 100 parts by mass.

The upper limit of the CTAB adsorption specific surface area of the specific silica is not particularly limited, but from the perspective of achieving superior effects of an embodiment of the present invention, the CTAB adsorption specific surface area is preferably not greater than 300 m²/g.

Note that the CTAB adsorption specific surface area is a value of the amount of CTAB adsorbed to the surface of silica measured in accordance with JIS K6217-3:2001 "Part 3: Determination of specific surface area - CTAB adsorption method."

### [III] Silane Coupling Agent

The silane coupling agent contained in the composition of an embodiment of the present invention is not particularly limited as long as the silane coupling agent is a silane compound having a hydrolyzable silyl group and an organic functional group.

The hydrolyzable group is not particularly limited; however, examples thereof include alkoxy groups, phenoxy groups, carboxyl groups, and alkenyloxy groups. Among these, from the perspective of achieving superior effects of an embodiment of the present invention, the hydrolyzable group is preferably an alkoxy group. When the hydrolyzable group is an alkoxy group, the number of carbons of the alkoxy group is preferably from 1 to 16, and more preferably from 1 to 4, from the perspective of achieving superior effects of an embodiment of the present invention. Examples of the alkoxy group having from 1 to 4 carbons include a methoxy group, ethoxy group, and propoxy group.

The organic functional group is not particularly limited, but is preferably a group that can form a chemical bond with an organic compound, and examples thereof include an epoxy group, a vinyl group, an acryloyl group, a methacryloyl group, an amino group, a sulfide group, a mercapto group, and a block mercapto group (protecting mercapto group) (for example, octanoylthio groups). Among these, from the perspective of achieving superior effects of an embodiment of the present invention, a sulfide group (particularly, a disulfide group or a tetrasulfide group), a mercapto group, and a block mercapto group are preferable.

Specific examples of the silane coupling agent include: bis-[3-(triethoxysilyl)-propyl]tetrasulfide, bis-[3-(trimethoxysilyl)-propyl]tetrasulfide, bis-[3-(triethoxysilyl)-propyl]disulfide, mercaptopropyl-trimethoxysilane, mercaptopropyl-triethoxysilane, 3-trimethoxysilylpropyl-N,N-dimethylthiocarbamoyl-tetrasulfide, trimethoxysilylpropyl-mercaptobenzothiazole tetrasulfide, triethoxysilylpropyl-methacrylate-monosulfide, dimethoxymethylsilylpropyl-N,N-dimethylthiocarbamoyl-tetrasulfide, and 3-octanoylthio-1-propyltriethoxysilane. One of these can be used alone, or a combination of two or more can be used.

### [1] Suitable Aspect

The silane coupling agent is preferably a compound represented by General Formula (S) below from the perspective of achieving superior effects of an embodiment of the present invention.

(CₙH₂ₙ₊₁O)₃-Si-CₘH₂ₘ-S-CO-CₖH₂ₖ₊₁ ... General Formula (S)

In General Formula (S), n represents an integer of from 1 to 3; m represents an integer of from 1 to 5 (preferably an integer of from, 2 to 4); and k represents an integer of from 1 to 15 (preferably an integer of from, 5 to 10).

### [2] Content

In the composition according to an embodiment of the present invention, the content of the silane coupling agent is from 3 to 30 mass% with respect to the content of the silica described above (the total content of all the silicas including the specific silica). Among these, from the perspective of achieving superior effects of an embodiment of the present invention, the content is preferably from 5 to 20 mass%.

Furthermore, in the composition according to an embodiment of the present invention, from the perspective of achieving superior effects of an embodiment of the present invention, the content of the silane coupling agent is preferably from 1 to 30 parts by mass, more preferably from 2 to 20 parts by mass, and even more preferably from 3 to 10 parts by mass, per 100 parts by mass of the rubber component described above.

### [IV] Optional Component

The composition according to an embodiment of the present invention may contain a component (optional component) other than the components described above, as necessary.

Examples of the optional component include various additives that are typically used in rubber compositions, such as fillers other than silica (e.g., carbon black), terpene resins (preferably aromatic-modified terpene resins), thermally expandable microcapsules, zinc oxide (flower of zinc), stearic acid, anti-aging agents, waxes, processing aids, process oils, liquid polymers, thermosetting resins, vulcanizing agents (e.g. sulfur), and vulcanization accelerators.

### [1] Carbon Black

From the perspective of achieving superior effects of an embodiment of the present invention, the composition according to an embodiment of the present invention preferably contains carbon black.

The carbon black is not particularly limited, and for example, carbon blacks of various grades, such as SAF-HS, SAF, ISAF-HS, ISAF, ISAF-LS, IISAF-HS, HAF-HS, HAF, HAF-LS, FEF, GPF, and SRF, can be used.

The nitrogen adsorption specific surface area (N₂SA) of the carbon black is not particularly limited, but is preferably from 50 to 200 m²/g and more preferably from 70 to 150 m^{2 g,} from the perspective of achieving superior effects of an embodiment of the present invention.

Note that the nitrogen adsorption specific surface area (N₂SA) is a value of the amount of nitrogen adsorbed to the surface of carbon black, measured in accordance with JIS K6217-2:2001 "Part 2: Determination of specific surface area - Nitrogen adsorption methods - Single-point procedures".

### Content

In the composition according to an embodiment of the present invention, the content of the carbon black is not particularly limited. However, from the perspective of achieving superior effects of an embodiment of the present invention, the content is preferably from 1 to 100 parts by mass, and more preferably from 2 to 10 parts by mass per 100 parts by mass of the rubber component described above.

### [2] Specific Alkyltriethoxysilane

The composition according to an embodiment of the present invention preferably contains an alkyltriethoxysilane represented by General Formula (I) below (hereinafter, also referred to as "specific alkyltriethoxysilane"), from the perspective of achieving superior effects of an embodiment of the present invention.

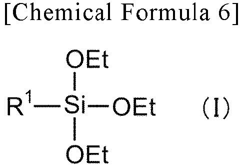

In General Formula (I) above, R¹ represents an alkyl group having from 7 to 20 carbons. Et represents an ethyl group.

Specific examples of the alkyl group having from 7 to 20 carbons include a heptyl group, an octyl group, a nonyl group, a decyl group, an undecyl group, and a dodecyl group. Among these, from the perspective of achieving superior effects of an embodiment of the present invention, the alkyl group having from 7 to 20 carbons is preferably an octyl group and a nonyl group.

### Content

In the composition according to an embodiment of the present invention, the content of the specific alkyltriethoxysilane is not particularly limited, but from the perspective of achieving superior effects of an embodiment of the present invention, the content is preferably from 2.0 to 15.0 mass% with respect to the content of silica described above (the total content of all the silicas including the specific silica).

### [3] Thermoplastic Resin

From the perspective of achieving superior effects of an embodiment of the present invention, the composition according to an embodiment of the present invention preferably contains the thermoplastic resin.

Examples of the thermoplastic resin include natural resins, such as terpene resins and rosin resins; and synthetic resins, such as petroleum resins, carboniferous resins, phenol resins, and xylene resins. Among these, from the perspective of achieving superior effects of an embodiment of the present invention, terpene resins are preferable, and examples of the terpene resins include α-pinene resin, β-pinene resin, limonene resin, hydrogenated limonene resin, dipentene resin, terpene phenol resin, terpene styrene resin, aromatic modified terpene resin, and hydrogenated terpene resin. Among these, from the perspective of achieving superior effects of an embodiment of the present invention, the aromatic modified terpene resin is preferable.

### Softening Point

From the perspective of achieving superior effects of an embodiment of the present invention, the softening point of the thermoplastic resin (particularly the aromatic modified terpene resin) is preferably 50°C or more and more preferably 80°C or more. From the perspective of achieving superior effects of an embodiment of the present invention, the upper limit of the softening point is preferably 170°C or less and more preferably 150°C or less.

Here, the softening point is a softening point measured in accordance with JIS K2207:1996.

### Content

In the composition according to an embodiment of the present invention, from the perspective of achieving superior effects of an embodiment of the present invention, the content of the thermoplastic resin (particularly the aromatic modified terpene resin) is preferably from 1 to 20 parts by mass, more preferably from 1 to 15 parts by mass, and even more preferably from 2 to 15 parts by mass per 100 parts by mass of the rubber component described above.

### [4] Liquid Diene Rubber

From the perspective of achieving superior effects of an embodiment of the present invention, the composition according to an embodiment of the present invention preferably contains the liquid diene rubber. From the perspective of achieving superior effects of an embodiment of the present invention, the liquid diene rubber is preferably liquid SBR or liquid BR, and liquid BR is more preferable.

### Suitable Aspect

From the perspective of achieving superior effects of an embodiment of the present invention, the liquid diene rubber preferably has a functional group derived from a silane compound represented by General Formula (II) below.

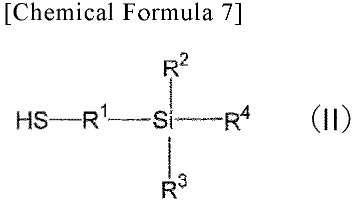

In General Formula (II), R¹ is a divalent alkylene group having from 1 to 6 carbons, R², R³, and R⁴ are each independent and represent a methoxy group, an ethoxy group, a phenoxy group, a methyl group, an ethyl group, or a phenyl group; where, at least one of R², R³, and R⁴ is a methoxy group, an ethoxy group, or a phenoxy group.

### Molecular Weight

The weight average molecular weight (Mw) of the liquid diene rubber is preferably 3000 or more and less than 100000 and more preferably 5000 or more and less than 80000, from the perspective of achieving superior effects of an embodiment of the present invention.

### Content

From the perspective of achieving superior effects of an embodiment of the present invention, in the composition according to an embodiment of the present invention, the content of the liquid diene rubber is preferably from 1.0 to 15.0 mass% and more preferably from 5.0 to 10.0 mass% with respect to the content of the silica described above (the total content of all the silicas including the specific silica).

### [B] Tire

The tire according to an embodiment of the present invention is a tire that is produced using the composition according to an embodiment of the present invention described above. The tire according to an embodiment of the present invention is preferably a pneumatic tire that can be inflated with any gas including air and inert gas, such as nitrogen. In particular, the pneumatic tire is preferably a pneumatic tire in which the composition according to an embodiment of the present invention is used (provided) in the tire tread (cap tread).

FIG. 1 illustrates a partial cross-sectional schematic view of a tire that represents a tire according to an embodiment of the present invention, but the tire according to an embodiment of the present invention is not limited to the aspect illustrated in FIG. 1.

In FIG. 1, the reference sign 1 denotes a bead portion, the reference sign 2 denotes a sidewall portion, and the reference sign 3 denotes a tire tread portion.

In addition, a carcass layer 4, in which a fiber cord is embedded, is mounted between a left-right pair of bead portions 1, and ends of the carcass layer 4 are wound by being folded around bead cores 5 and a bead filler 6 from an inner side to an outer side of the tire.

In the tire tread portion 3, a belt layer 7 is provided along the entire circumference of the tire on the outer side of the carcass layer 4.

Additionally, a rim cushion 8 is provided in a portion of each of the bead portions 1 that is in contact with a rim.

Note that the tire tread portion 3 is formed from the composition according to an embodiment of the present invention described above.

The tire according to an embodiment of the present invention can be produced, for example, in accordance with a known method. In addition to ordinary air or air with an adjusted oxygen partial pressure, inert gases such as nitrogen, argon, and helium can be used as the gas with which the tire is filled.

### Examples

An embodiment of the present invention will be described in further detail below by way of examples. However, an embodiment of the present invention is not limited to these examples.

### Production of Specific Conjugated Diene Rubber 1

The specific Conjugated diene rubbers 1 were produced as described below.

### Step A

In a nitrogen-purged 800-ml container, 140.8 g of cyclohexane and 3.0 mmol of tetramethyl ethylenediamine were added, and then 30.0 mmol of n-butyllithium was further added. Then, 113.6 g of isoprene and 9.2 g of styrene were slowly added, and the mixture was reacted for 120 minutes in the container at 50°C to yield a polymer block (A) having an active terminal. The weight average molecular weight (Mw) of this polymer block (A) was 6500, the molecular weight distribution (Mw/Mn) was 1.10, the styrene monomer unit content was 7.5 mass%, the isoprene monomer unit content was 92.5 mass%, and the vinyl bond content in the isoprene monomer unit was 7.0 mass%.

### Step B

In an autoclave with agitator, 6400 g of cyclohexane, 2.95 mmol of tetramethylethylene diamine, 585 g of 1,3-butadiene, 615 g of styrene, and 0.95 g of bis(diethylamino)methylvinylsilane (in General Formula (1) above, the compound in which X¹ = chemical single-bond, X² and X³ = diethylamino group, X⁴ = methyl group) were prepared in a nitrogen atmosphere. After that, 7.01 mmol of n-butyl lithium was added, 0.51 mmol in lithium atom content of the polymer block (A) having the active terminal was added, and polymerization was started at 40°C. 10 minutes after the start of the polymerization, 300 g of 1,3-butadiene was continuously added over 60 minutes. After completion of the continuous addition, the polymerization reaction was further continued for 20 minutes, and it was confirmed that the polymer conversion rate was in the range of from 95% to 100%. In this way, the conjugated diene polymer chain including the polymer block (A) and the polymer block (B) and having an active terminal was able to be obtained.

### Bis(Diethylamino)Methylvinylsilane

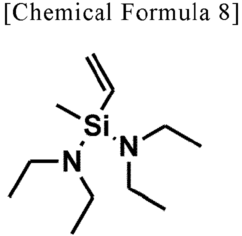

### Step C

Next, the polyorganosiloxane represented by Formula (9) below was added to such that content of -Si-O-repeating units became 7.15 mmol, and the resultant was reacted for 30 minutes. After that, methanol in an amount equivalent to twice the number of moles of n-butyllithium used was added as a polymerization quencher, and a solution containing a conjugated diene rubber was obtained. To this solution, 0.20 parts by mass of Irganox 1520L (available from BASF) was added as an anti-aging agent per 100 parts by mass of the conjugated diene rubber, and 15.0 parts by mass of extender oil (trade name "Aromax T-DAE" available from JX Nikko Nisseki Energy Co., Ltd.) per 100 parts by mass of the conjugated diene rubber, and then the solvent was removed by steam stripping, and the resulting substance was vacuum-dried for 24 hours at 60°C to obtain a solid conjugated diene rubber.

The weight average molecular weight (Mw) of the obtained conjugated diene rubber was 590000, the styrene monomer unit content was 41 mass%, and the vinyl bond content was 25 mass%. Additionally, the bis(diethylamino)methylvinylsilane monomer unit content in the obtained conjugated diene rubber was 0.06 mass%. The glass transition temperature of the obtained conjugated diene rubber was -26°C.

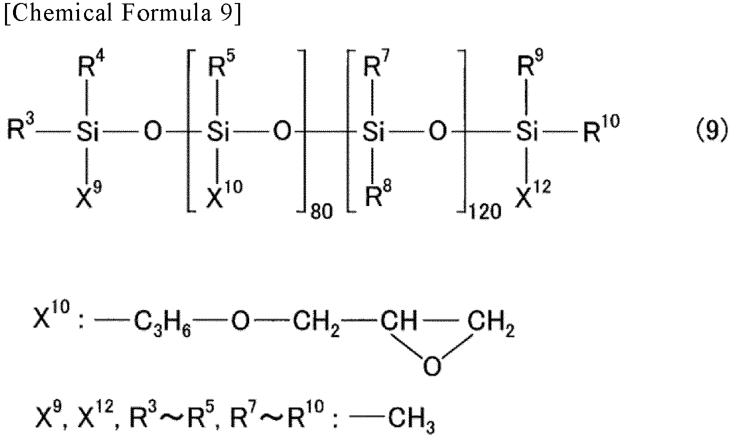

The obtained conjugated diene rubber is a conjugated diene rubber that includes the polymer block (A) containing isoprene monomer units and styrene monomer units and the polymer block (B) containing 1,3-butadiene monomer units, styrene monomer units, and bis(diethylamino)methylvinylsilane monomer units (units of vinyl compounds containing an amino group as a functional group that can interact with silica), and has the modified structure of the polyorganosiloxane (siloxane compound) represented by General Formula (9) above at the terminal. Furthermore, the weight average molecular weight (Mw) of the polymer block (A) is in the range of from 1000 to 30000, and the entire weight average molecular weight (Mw) is in the range of from 50000 to 5000000. Furthermore, the entire styrene monomer unit content (the aromatic vinyl monomer unit content) is from 30 to 45 mass%, and the entire vinyl bond content is from 15 to 35 mass%.

Accordingly, the obtained conjugated diene rubber corresponds to the specific conjugated diene rubber described above.

The obtained conjugated diene rubber is also referred to as the specific conjugated diene rubber 1.

### Comparative Conjugated Diene Rubber

In Step B, except that the amount of tetramethylethylene diamine was changed to 0.71 mmol, the amount of 1,3-butadiene was changed to 763 g, and the amount of styrene was changed to 28.7 g, the conjugated diene rubber was produced according to the procedure same as the production of the specific conjugated diene rubber 1 described above.

The weight average molecular weight (Mw) of the obtained conjugated diene rubber was 750000, the styrene monomer unit content was 28 mass%, and the vinyl bond content was 59 mass%. Additionally, the bis(diethylamino)methylvinylsilane monomer unit content in the obtained conjugated diene rubber was 0.15 mass%. The glass transition temperature of the obtained conjugated diene rubber was -21°C.

The obtained conjugated diene rubber is a conjugated diene rubber that includes the polymer block (A) containing isoprene monomer units and styrene monomer units and the polymer block (B) containing 1,3-butadiene monomer units, styrene monomer units, and bis(diethylamino)methylvinylsilane monomer units (units of vinyl compounds containing an amino group as a functional group that can interact with silica), and has the modified structure of the polyorganosiloxane (siloxane compound) represented by General Formula (9) above at the terminal. Furthermore, the weight average molecular weight (Mw) of the polymer block (A) is in the range of from 1000 to 30000, and the entire weight average molecular weight (Mw) is in the range of from 50000 to 5000000. On the other hand, in the obtained conjugated diene rubber, the entire styrene monomer unit content (the aromatic vinyl monomer unit content) is outside the range of from 30 to 45 mass%, and the entire vinyl bond content is outside the range of from 15 to 35 mass%, and therefore the conjugated diene rubber does not correspond to the specific conjugated diene rubber described above.

The obtained conjugated diene rubber is referred to as a comparative conjugated diene rubber.

### Preparation of Rubber Composition of Tire

The components shown in Table 1 below were blended at proportions (parts by mass) shown in the table.

Specifically, a master batch was obtained by first heating, to a temperature near 140°C, the components shown in Table 1, excluding the sulfur and the vulcanization accelerator, for 5 minutes in a 1.7-L closed-type Banbury mixer, and then discharging the mixture and cooling it to room temperature. Further, sulfur and a vulcanization accelerator were mixed into the resulting master batch using the Banbury mixer described above so as to obtain a rubber composition of a tire.

Note that when the rubber component is an oil extended product, the part by mass represents a net amount of the rubber (amount excluding oil amount).

### Evaluation

The following evaluations were performed for the obtained rubber composition of the tire.

### Cracking Growth Resistance

The flex cracking growth resistance (crack growth resistance) of vulcanized rubber was measured in accordance with JIS K6260. The results are shown by five levels with the value of Comparative Example 1 as the standard (3).

The results are shown in Table 1. Larger values indicate superior crack growth resistance. The value is preferably 4 or more.

### Groove Cracking Resistance

A pneumatic tire was manufactured using the obtained rubber composition of the tire. The obtained pneumatic tire was mounted on a test vehicle, and after traveling a constant distance, the tire was observed visually to evaluate groove cracking resistance (5-step evaluation).

The results are shown in Table 1. Larger values indicate superior groove cracking resistance. The value is preferably 4 or more.

### Wear Resistance

A vulcanized rubber sheet was prepared by press-vulcanizing the obtained rubber composition of the tire for 15 minutes at 160°C in a mold (15 cm × 15 cm × 0.2 cm).

The amount of wear of the obtained vulcanized rubber sheet was measured in accordance with JIS K 6264-1, 2:2005 using a Lambourn abrasion test machine (available from Iwamoto Seisakusho Co., Ltd.) in conditions of a temperature of 20°C and a slip rate of 50%. Wear resistance index value was then calculated by the following equation.

The results are shown in Table 1. Larger index values means smaller amounts of wear and superior wear resistance. The wear resistance index value is preferably 105 or more. Wear resistance index value = (amount of wear of Comparative Example 1/amount of wear of each vulcanized rubber sheet) × 100

### Chipping Resistance

A pneumatic tire was manufactured using the obtained rubber composition of the tire. The obtained pneumatic tire was mounted on a test vehicle, and after traveling a constant distance, the tire was observed visually to evaluate chipping resistance (5-step evaluation).

The results are shown in Table 1. Larger values indicate superior crack chipping resistance. The value is preferably 4 or more.

**Table 1-1**

| Table 1 | St | Vn | Mw | Tg | Comparative Example 1 | Comparative Example 2 | Comparative Example 3 |
|---|---|---|---|---|---|---|---|
| Specific conjugated diene rubber 1 | 41 | 25 | 59 | -26 | | 30 | |
| Comparative conjugated diene rubber | 28 | 59 | 75 | -21 | | | 70 |
| Rubber component 1 | 43 | 30 | 65 | -26 | 70 | 40 | |
| NR | - | - | - | - | 30 | 30 | 30 |
| NS612 | 15 | 31 | 44 | -61 | | | |
| 7000 GR | - | - | - | - | 70 | 70 | 70 |
| 9100 GR | - | - | - | - | | | |
| N339 | - | - | - | - | 5 | 5 | 5 |
| NXT | - | - | - | - | 5.6 | 5.6 | 5.6 |
| Zinc oxide | - | - | - | - | 3 | 3 | 3 |
| Stearic acid | - | - | - | - | 2 | 2 | 2 |
| Anti-aging agent | - | - | - | - | 1.5 | 1.5 | 1.5 |
| Process oil | - | - | - | - | 30 | 30 | 30 |
| Alkylsilane | - | - | - | - | | | |
| Thermoplastic resin | - | - | - | - | | | |
| Modified LBR | - | - | - | - | | | |
| Sulfur | - | - | - | - | 1.5 | 1.5 | 1.5 |
| Vulcanization accelerator (CZ) | - | - | - | - | 1.7 | 1.7 | 1.7 |
| Vulcanization accelerator (DPG) | - | - | - | - | 2 | 2 | 2 |
| Crack growth resistance | - | - | - | - | 3 | 3 | 4 |
| Groove cracking resistance | - | - | - | - | 3 | 3 | 4 |
| Wear resistance | - | - | - | - | 100 | 102 | 104 |
| Chipping resistance | - | - | - | - | 3 | 3 | 3 |

**Table 1-2**

| Table 1 | St | Vn | Mw | Tg | Comparative Example 4 | Comparative Example 5 | Example 1 |
|---|---|---|---|---|---|---|---|
| Specific conjugated diene rubber 1 | 41 | 25 | 59 | -26 | 70 | | 70 |
| Comparative conjugated diene rubber | 28 | 59 | 75 | -21 | | | |
| Rubber component 1 | 43 | 30 | 65 | -26 | | 70 | |
| NR | - | - | - | - | 5 | 30 | 30 |
| NS612 | 15 | 31 | 44 | -61 | 25 | | |
| 7000 GR | - | - | - | - | 70 | 70 | 70 |
| 9100 GR | - | - | - | - | | | |
| N339 | - | - | - | - | 5 | 5 | 5 |
| NXT | - | - | - | - | 5.6 | 5.6 | 5.6 |
| Zinc oxide | - | - | - | - | 3 | 3 | 3 |
| Stearic acid | - | - | - | - | 2 | 2 | 2 |
| Anti-aging agent | - | - | - | - | 1.5 | 1.5 | 1.5 |
| Process oil | - | - | - | - | 30 | 30 | 30 |
| Alkylsilane | - | - | - | - | | | |
| Thermoplastic resin | - | - | - | - | | | |
| Modified LBR | - | - | - | - | | | |
| Sulfur | - | - | - | - | 1.5 | 1.5 | 1.5 |
| Vulcanization accelerator (CZ) | - | - | - | - | 1.7 | 1.7 | 1.7 |
| Vulcanization accelerator (DPG) | - | - | - | - | 2 | 2.3 | 2 |
| Crack growth resistance | - | - | - | - | 4 | 3 | 5 |
| Groove cracking resistance | - | - | - | - | 3 | 3 | 5 |
| Wear resistance | - | - | - | - | 106 | 99 | 110 |
| Chipping resistance | - | - | - | - | 2 | 3 | 5 |

**Table 1-3**

| Table 1 | St | Vn | Mw | Tg | Example 2 | Example 3 | Example 4 | Example 5 | Example 6 |
|---|---|---|---|---|---|---|---|---|---|
| Specific conjugated diene rubber 1 | 41 | 25 | 59 | -26 | 40 | 70 | 70 | 70 | 70 |
| Comparative conjugated diene rubber | 28 | 59 | 75 | -21 | | | | | |
| Rubber component 1 | 43 | 30 | 65 | -26 | 30 | | | | |
| NR | - | - | - | - | 30 | 30 | 30 | 30 | 30 |
| NS612 | 15 | 31 | 44 | -61 | | | | | |
| 7000 GR | - | - | - | - | 70 | | | | |
| 9100 GR | - | - | - | - | | 70 | 70 | 70 | 70 |
| N339 | - | - | - | - | 5 | 5 | 5 | 5 | 5 |
| NXT | - | - | - | - | 5.6 | 7 | 7 | 7 | 7 |
| Zinc oxide | - | - | - | - | 3 | 3 | 3 | 3 | 3 |
| Stearic acid | - | - | - | - | 2 | 2 | 2 | 2 | 2 |
| Anti-aging agent | - | - | - | - | 1.5 | 1.5 | 1.5 | 1.5 | 1.5 |
| Process oil | - | - | - | - | 30 | 30 | 25 | 25 | 25 |
| Alkylsilane | - | - | - | - | | | 5 | | |
| Thermoplastic resin | - | - | - | - | | | | | 5 |
| Modified LBR | - | - | - | - | | | | 5 | |
| Sulfur | - | - | - | - | 1.5 | 1.5 | 1.5 | 1.5 | 1.5 |
| Vulcanization accelerator (CZ) | - | - | - | - | 1.7 | 1.7 | 1.7 | 1.7 | 1.7 |
| Vulcanization accelerator (DPG) | - | - | - | - | 2 | 2 | 2 | 2 | 2 |
| Crack growth resistance | - | - | - | - | 4 | 5 | 5 | 5 | 5 |
| Groove cracking resistance | - | - | - | - | 4 | 5 | 5 | 5 | 5 |
| Wear resistance | - | - | - | - | 107 | 116 | 118 | 123 | 120 |
| Chipping resistance | - | - | - | - | 4 | 5 | 5 | 5 | 5 |

The details of each of the components shown in Table 1 above are as follows.
- Specific conjugated diene rubber 1: The specific conjugated diene rubber 1 produced as described above (as described above, the specific conjugated diene rubber 1 corresponds to the specific conjugated diene rubber described above.)
- Comparative conjugated diene rubber: The comparative conjugated diene rubber produced as described above (as described above, the comparative conjugated diene rubber does not correspond to the specific conjugated diene rubber described above.)
- Rubber component 1: A solution-polymerized styrene-butadiene rubber having a polyorganosiloxane group at a terminal and an isoprene block (Oil extended product (containing 25 parts by mass of extender oil per 100 parts by mass of SBR), styrene monomer unit content: 43 mass%, vinyl bond content: 30 mass%, weight average molecular weight: 650000, Tg: -26°C) (Since the rubber component 1 does not contain the units of the vinyl compound containing the amino group as the functional group that can interact with silica, it does not correspond to the specific conjugated diene rubber described above.)
- NR: Natural rubber (TSR20, available from VON BUNDIT)
- NS612: NS612 available from ZEON CORPORATION (solution polymerized SBR, styrene monomer unit content: 15 mass%, vinyl bond content: 31 mass%, weight average molecular weight: 440000, Tg: -61°C) (NS612 does not correspond to the specific conjugated diene rubber described above.)
- 7000GR: ULTRASIL 7000GR (silica, CTAB adsorption specific surface area: 160 m2/g, available from Evonik Industries AG)
- 9100 GR: ULTRASIL 9100GR (silica, CTAB adsorption specific surface area: 200 m²/g, available from Evonik)
- N339: Show Black N339 (carbon black, available from Cabot Japan K.K.)
- NXT: Silane coupling agent represented by General Formula (S) described above (where n = 2, m = 3, and k = 7)
- Zinc oxide: Zinc Oxide III (available from Seido Chemical Industry Co., Ltd.)
- Stearic acid: Stearic acid bead (available from NOF Corporation)
- Anti-aging agent: OZONONE 6C (available from Seiko Chemical Co., Ltd.)
- Process oil: Extract No. 4S (available from Showa Shell Sekiyu K.K.)
- Alkylsilane: Octyltriethoxysilane (KBE-3083, available from Shin-Etsu Chemical Co., Ltd.) (The alkylsilane corresponds to the specific alkyltriethoxysilane described above.)
- Thermoplastic resin: YS Resin TO125 available from Yasuhara Chemical Co., Ltd. (aromatic modified terpene resin, softening point: 125°C)
- Modified LBR: Modified liquid diene rubber produced as follows

A well-dried 5 L autoclave was purged with nitrogen, 1200 g of hexane and 22 g of n-butyllithium (17 mass% hexane solution) were prepared, and after the temperature was raised to 50°C, while the polymerization temperature was controlled to be 50°C under the agitation condition, 1460 g of butadiene was added sequentially and polymerization was performed for one hour. Thereafter, methanol was added to stop the polymerization reaction, and a polymer solution was obtained. Water was added to the obtained polymer solution, and the polymer solution was agitated and washed with water. The agitation was completed, and after confirming that a polymer solution phase and an aqueous phase were separated, the water was separated. The polymer solution after completing the washing was vacuum-dried at 70°C for 24 hours to obtain an unmodified liquid diene rubber.

Next, 700 g of the obtained unmodified liquid diene rubber was prepared in an autoclave with a volume of 1 L, and while it was agitated at 60°C for 3 hours, nitrogen degassing was performed. 1.0 g of 1,1-bis(t-hexylperoxy)cyclohexane and 25 g of (3-mercaptopropyl)trimethoxysilane were added and reacted at 105° C for 8 hours to obtain a modified liquid diene rubber. The weight average molecular weight of the obtained modified liquid diene rubber was 55000. The obtained modified liquid diene rubber is liquid BR having a functional group derived from the silane compound represented by General Formula (II) described above.
- Sulfur: Golden Flower oil treated sulfur powder (sulfur content: 95.24 mass%, available from Tsurumi Chemical Industry Co., Ltd.)
- Vulcanization accelerator (CZ): NOCCELER CZ-G, available from Ouchi Shinko Chemical Industrial Co., Ltd.
- Vulcanization accelerator (DPG): 1,3-diphenylguanidine (Soxinol D-G, available from Sumitomo Chemical Co., Ltd.)

Note that, in Table 1, St represents the styrene monomer unit content (mass%), Vn represents the vinyl bond content (mass%), Mw represents the weight average molecular weight (× 10⁴), and Tg represents the glass transition temperature (°C).

As can be seen from Table 1, Examples 1 to 6 in which the specific conjugated diene rubber and the natural rubber were used together in predetermined amounts exhibited excellent crack growth resistance, groove cracking resistance, wear resistance, and chipping resistance.

From a comparison between Example 1 and Example 2 (a comparison between aspects using 7000 GR as silica), Example 1 whose content of the specific conjugated diene rubber in the rubber component was 50 mass% or more exhibited more excellent crack growth resistance, groove cracking resistance, wear resistance, and chipping resistance.

From the comparison between Example 1 and Example 3 (the comparison of the aspects in which only the kinds of silica differed), Example 3 in which the silica contained the specific silica described above by 20 parts by mass or more exhibited more excellent wear resistance.

Furthermore, from the comparison between Example 3 and Example 4 (the comparison between the aspects in which only the presence/absence of the alkylsilane was different), Example 4 containing the specific alkyltriethoxysilane exhibited more excellent wear resistance.

Furthermore, from the comparison between Example 3 and Example 5 (the comparison between the aspects in which only the presence/absence of the modified LBR was different), Example 5 containing the liquid diene rubber exhibited more excellent wear resistance.

Furthermore, from the comparison between Example 3 and Example 6 (the comparison between the aspects in which only the presence/absence of the thermoplastic resin was different), Example 6 containing the thermoplastic resin exhibited more excellent wear resistance.

On the other hand, in Comparative Example 1, Comparative Example 3, and Comparative Example 5, which contained no specific conjugated diene rubber, Comparative Example 2, which contained the specific conjugated diene rubber and the natural rubber but the content of the specific conjugated diene rubber in the rubber component was less than 35 mass%, and Comparative Example 4, which contained the specific conjugated diene rubber and the natural rubber, but the content of the natural rubber in the rubber component was less than 10 mass%, at least one of crack growth resistance, groove cracking resistance, wear resistance, and chipping resistance was insufficient.

### Reference Signs List

1 Bead portion
2 Sidewall portion
3 Tire tread portion
4 Carcass layer
5 Bead core
6 Bead filler
7 Belt layer
8 Rim cushion

## Claims

1. A rubber composition of a tire, comprising:
a rubber component;
a silica; and
a silane coupling agent;
the rubber component containing a specific conjugated diene rubber and a natural rubber,
in the rubber component, the content of the specific conjugated diene rubber being 35 mass% or more and the content of the natural rubber being 10 mass% or more,
the specific conjugated diene rubber being a conjugated diene rubber comprising a polymer block (A) containing an isoprene monomer unit and a polymer block (B) containing a 1,3-butadiene monomer unit and having a modified structure by a siloxane compound at least at one terminal,
in the conjugated diene rubber:
at least one of the polymer block (A) and the polymer block (B) containing a unit of a vinyl compound containing an amino group as a functional group interactable with a silica;
the polymer block (A) having a weight average molecular weight (Mw) in a range of from 1000 to 30000, and an entire weight average molecular weight (Mw) in a range of from 50000 to 5000000;
an entire aromatic vinyl monomer unit content being from 30 to 45 mass%; and an entire vinyl bond content being from 15 to 35 mass%,
the content of the silica being from 50 to 150 parts by mass per 100 parts by mass of the rubber component, and
the content of the silane coupling agent being from 3 to 30 mass% with respect to the content of the silica.

2. The rubber composition of the tire according to claim 1, wherein the aromatic vinyl monomer unit content of the specific conjugated diene rubber is from 35 to 45 mass%.

3. The rubber composition of the tire according to claim 1 or 2, further comprising a thermoplastic resin having a softening point of 50°C or more, wherein the content of the thermoplastic resin is from 1 to 20 parts by mass per 100 parts by mass of the rubber component, wherein the softening point is measured in accordance with JIS K2207:1996.

4. The rubber composition of the tire according to any one of claims 1 to 3, wherein the silica contains 20 parts by mass or more of a specific silica as a silica having a CTAB adsorption specific surface area of 190 m²/g or more, wherein the CTAB adsorption specific surface area is a value of the amount of CTAB adsorbed to the surface of silica measured in accordance with JIS K6217-3:2001.

5. The rubber composition of the tire according to any one of claims 1 to 4, further comprising
alkyltriethoxysilane represented by General Formula (I), wherein the content of the alkyltriethoxysilane is from 2.0 to 15.0 mass% with respect to the content of the silica; 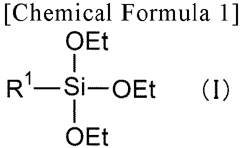
In General Formula (I), R¹ represents an alkyl group having from 7 to 20 carbons, and Et represents an ethyl group.

6. The rubber composition of the tire according to any one of claims 1 to 5, further comprising
a liquid diene rubber having a weight average molecular weight of 3000 or more, wherein the content of the liquid diene rubber is from 1.0 to 15.0 mass% with respect to the content of the silica.

7. The rubber composition of the tire according to claim 6, wherein the liquid diene rubber has a functional group derived from a silane compound represented by General Formula (II); 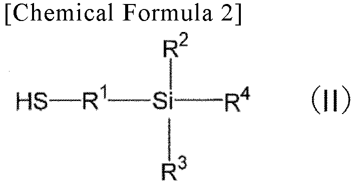 In General Formula (II), R¹ is a divalent alkylene group having from 1 to 6 carbons, R², R³, and R⁴ are each independent and represent a methoxy group, an ethoxy group, a phenoxy group, a methyl group, an ethyl group, or a phenyl group; where, at least one of R², R³, and R⁴ is a methoxy group, an ethoxy group, or a phenoxy group.

8. A tire manufactured using the rubber composition of the tire according to any one of claims 1 to 7.

## Patentansprüche

1. Gummizusammensetzung eines Reifens, umfassend:
eine Gummikomponente,
ein Siliciumdioxid, und
ein Silan-Kupplungsmittel,
wobei die Gummikomponente einen spezifischen konjugierten Dien-Kautschuk und einen Naturkautschuk enthält,
wobei in der Gummikomponente der Gehalt des spezifischen konjugierten Dien-Kautschuks 35 Massen-% oder mehr und der Gehalt des Naturkautschuks 10 Massen-% oder mehr beträgt,
wobei der spezifische konjugierte Dien-Kautschuk ein konjugierter Dien-Kautschuk ist, welcher einen Polymerblock (A), der eine Isopren-Monomereinheit enthält, und einen Polymerblock (B), der eine 1,3-Butadien-Monomereinheit enthält, umfasst und eine modifizierte Struktur durch eine Siloxanverbindung an mindestens einem Ende aufweist,
wobei in dem konjugierten Dien-Kautschuk:
mindestens einer von dem Polymerblock (A) und dem Polymerblock (B) eine Einheit einer Vinylverbindung enthält, welche eine Aminogruppe als eine funktionelle Gruppe, die mit einem Siliciumdioxid wechselwirken kann, enthält,
der Polymerblock (A) ein gewichtsmittleres Molekulargewicht (Mw) im Bereich von 1000 bis 30000 und ein gesamtes gewichtsmittleres Molekulargewicht (Mw) im Bereich von 50000 bis 5000000 aufweist,
ein gesamter Gehalt an aromatischen Vinyl-Monomereinheiten 30 bis 45 Massen-% beträgt, und
ein gesamter Gehalt an gebundenem Vinyl von 15 bis 35 Massen-% beträgt,
der Gehalt an Siliciumdioxid von 50 bis 150 Masseteilen pro 100 Masseteile der Kautschukkomponente beträgt und
der Gehalt an Silan-Kupplungsmittel von 3 bis 30 Massen-%, bezogen auf den Gehalt an Siliciumdioxid, beträgt.

2. Gummizusammensetzung des Reifens gemäß Anspruch 1, wobei der Gehalt an aromatischen Vinyl-Monomereinheiten des spezifischen konjugierten Dien-Kautschuks 35 bis 45 Massen-% beträgt.

3. Gummizusammensetzung des Reifens gemäß Anspruch 1 oder 2, welche ferner ein thermoplastisches Harz mit einem Erweichungspunkt von 50 °C oder mehr umfasst, wobei der Gehalt des thermoplastischen Harzes 1 bis 20 Massenteile pro 100 Massenteile der Kautschukkomponente beträgt, wobei der Erweichungspunkt gemäß JIS K2207:1996 gemessen wird.

4. Gummizusammensetzung des Reifens gemäß einem der Ansprüche 1 bis 3, wobei das Siliciumdioxid 20 Massenteile oder mehr eines spezifischen Siliciumdioxids als Siliciumdioxid mit einer spezifischen Oberfläche durch CTAB-Adsorption von 190 m²/g oder mehr enthält, wobei die spezifische Oberfläche durch CTAB-Adsorption ein Wert der Menge von an der Oberfläche des Siliciumdioxids adsorbiertem CTAB ist, gemessen gemäß JIS K6217₋3:2001.

5. Gummizusammensetzung des Reifens gemäß einem der Ansprüche 1 bis 4, ferner umfassend:
Alkyltriethoxysilan, dargestellt durch die allgemeine Formel (I), wobei der Gehalt des Alkyltriethoxysilans 2,0 bis 15,0 Massen-%, bezogen auf den Gehalt des Siliciumdioxids, beträgt; 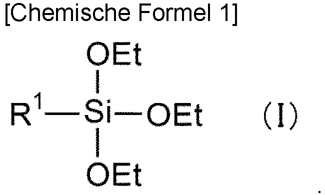
In der allgemeinen Formel (I) steht R¹ für eine Alkylgruppe mit 7 bis 20 Kohlenstoffatomen und Et für eine Ethylgruppe.

6. Gummizusammensetzung des Reifens gemäß einem der Ansprüche 1 bis 5, ferner umfassend:
einen flüssigen Dien-Kautschuk mit einem gewichtsmittleren Molekulargewicht von 3000 oder mehr, wobei der Gehalt des flüssigen Dien-Kautschuks 1,0 bis 15,0 Massen-% beträgt, bezogen auf den Gehalt des Siliciumdioxids.

7. Gummizusammensetzung des Reifens gemäß Anspruch 6, wobei der flüssige Dien-Kautschuk eine funktionelle Gruppe, die von einer Silanverbindung abgeleitet ist, welche durch die allgemeine Formel (II) dargestellt wird, aufweist: 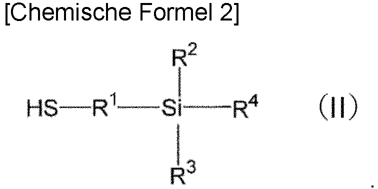 In der allgemeinen Formel (II) ist R¹ eine zweiwertige Alkylengruppe mit 1 bis 6 Kohlenstoffatomen, R², R³ und R⁴ sind jeweils unabhängig und stellen eine Methoxygruppe, eine Ethoxygruppe, eine Phenoxygruppe, eine Methylgruppe, eine Ethylgruppe oder eine Phenylgruppe dar, wobei mindestens einer von R², R³ und R⁴ eine Methoxygruppe, eine Ethoxygruppe oder eine Phenoxygruppe ist.

8. Reifen, hergestellt unter Verwendung der Gummizusammensetzung des Reifens gemäß einem der Ansprüche 1 bis 7.

## Revendications

1. Composition de caoutchouc de pneu, comprenant :
un composant de caoutchouc ;
une silice ; et
un agent de couplage à un silane ;
le composant de caoutchouc contenant un caoutchouc diène conjugué spécifique et un caoutchouc naturel,
dans le composant de caoutchouc, la teneur en caoutchouc diène conjugué spécifique étant de 35 % en masse ou plus, et la teneur en caoutchouc naturel étant de 10 % en masse ou plus,
le caoutchouc diène conjugué spécifique étant un caoutchouc diène conjugué comprenant un bloc polymère (A) contenant une unité monomère d'isoprène et un bloc polymère (B) contenant une unité monomère 1,3-butadiène et ayant une structure modifiée par un composé siloxane à au moins à une terminaison,
dans le caoutchouc diène conjugué :
au moins un bloc parmi le bloc polymère (A) et le bloc polymère (B) contenant une unité d'un composé vinylique contenant un groupe amino comme groupe fonctionnel pouvant interagir avec une silice ;
le bloc polymère (A) ayant une masse moléculaire moyenne en nombre (Mw) comprise dans une plage de 1 000 à 30 000, et une masse moléculaire moyenne en nombre (Mw) totale comprise dans une plage de 50 000 à 5 000 000 ;
la teneur totale en unités monomères vinyliques aromatiques étant comprise entre 30 % et 45 % en masse ; et
la teneur totale en liant vinylique étant comprise entre 15 % et 35 % en masse,
la teneur en silice étant comprise entre 50 et 150 parties en masse pour 100 parties en masse du composant de caoutchouc, et
la teneur en agent de couplage silane étant comprise entre 3 % et 30 % en masse par rapport à la teneur en silice.

2. Composition de caoutchouc de pneu selon la revendication 1, dans laquelle la teneur en unités monomères vinyliques aromatiques du caoutchouc diène conjugué spécifique est comprise entre 35 % et 45 % en masse.

3. Composition de caoutchouc de pneu selon la revendication 1 ou 2, comprenant en outre
une résine thermoplastique ayant un point de ramollissement à 50 °C ou plus, dans laquelle la teneur en résine thermoplastique est comprise entre 1 et 20 parties en masse pour 100 parties en masse du composant de caoutchouc, dans laquelle le point de ramollissement est mesuré conformément à la norme JIS K2207:1996.

4. Composition de caoutchouc de pneu selon l'une quelconque des revendications 1 à 3, dans laquelle la silice contient 20 parties en masse ou plus d'une silice spécifique en tant que silice ayant une surface spécifique d'adsorption de CTAB de 190 m²/g ou plus, dans laquelle la surface spécifique d'adsorption de CTAB est la valeur de la quantité de CTAB adsorbée à la surface de la silice, mesurée conformément à la norme JIS K6217-3:2001.

5. Composition de caoutchouc de pneu selon l'une quelconque des revendications 1 à 4, comprenant en outre
un alkyltriéthoxysilane représenté par la formule générale (I), dans laquelle la teneur en alkyltriéthoxysilane est comprise entre 2,0 % et 15,0 % en masse par rapport à la teneur en silice ; 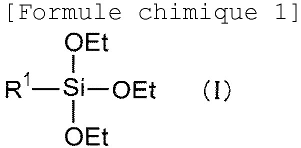
où, dans la formule générale (I), R¹ représente un groupe alkyle ayant de 7 à 20 carbones, et Et représente un groupe éthyle.

6. Composition de caoutchouc de pneu selon l'une quelconque des revendications 1 à 5, comprenant en outre
un caoutchouc diène liquide ayant une masse moléculaire moyenne en nombre de 3 000 ou plus, dans laquelle la teneur en caoutchouc diène liquide est comprise entre 1,0 % et 15,0 % en masse par rapport à la teneur en silice.

7. Composition de caoutchouc de pneu selon la revendication 6, dans laquelle le caoutchouc diène liquide possède un groupe fonctionnel dérivé d'un composé silane représenté par la formule générale (II) ; 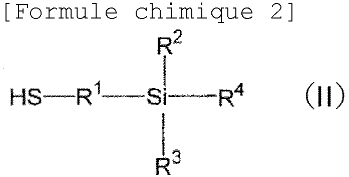 où, dans la formule générale (II), R¹ est un groupe alcène bivalent ayant de 1 à 6 carbones, R², R³ et R⁴ sont chacun indépendants et représentent un groupe méthoxy, un groupe éthoxy, un groupe phénoxy, un groupe méthyle, un groupe éthyle ou un groupe phényle ; où au moins l'un des groupes R², R³ et R⁴ est un groupe méthoxy, un groupe éthoxy ou un groupe phénoxy.

8. Pneu fabriqué en utilisant la composition de caoutchouc de pneu selon l'une quelconque des revendications 1 à 7.
